(19) **Europäisches Patentamt**
**European Patent Office**
**Office européen des brevets**

(11) **EP 4 607 924 A1**

(12) **EUROPEAN PATENT APPLICATION**
published in accordance with Art. 153(4) EPC

(43) Date of publication:
**27.08.2025 Bulletin 2025/35**

(21) Application number: 23880255.7

(22) Date of filing: **19.10.2023**

(51) International Patent Classification (IPC):
*H04N 19/30* (2014.01)     *H04N 19/597* (2014.01)
*H04N 19/132* (2014.01)     *H04N 19/96* (2014.01)
*H04N 19/70* (2014.01)

(52) Cooperative Patent Classification (CPC):
**H04N 19/132; H04N 19/30; H04N 19/597;**
**H04N 19/70; H04N 19/96**

(86) International application number:
**PCT/KR2023/016243**

(87) International publication number:
**WO 2024/085680 (25.04.2024 Gazette 2024/17)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **19.10.2022 KR 20220135160**

(71) Applicant: **LG Electronics Inc.**
**Yeongdeungpo-gu**
**Seoul 07336 (KR)**

(72) Inventor: **OH, Hyunmook**
**Seoul 06772 (KR)**

(74) Representative: **Plasseraud IP**
**104 Rue de Richelieu**
**CS92104**
**75080 Paris Cedex 02 (FR)**

(54) **POINT CLOUD DATA TRANSMISSION DEVICE, POINT CLOUD DATA TRANSMISSION METHOD, POINT CLOUD DATA RECEPTION DEVICE, AND POINT CLOUD DATA RECEPTION METHOD**

(57)     A point cloud data transmission method, according to embodiments, may comprise the steps of: encoding geometry data of point cloud data, encoding attribute data of the point cloud data on the basis of the geometry data, and transmitting the encoded geometry data, the encoded attribute data, and signaling information.

**FIG. 21**

partial geometry (octree depth 3 out of 4) / partial attribute case

root / leaf

Sample the LAST child node
Sample the FIRST child node
Sample the LAST child node
Sample the FIRST child node

**Description**

[Technical Field]

Embodiments relate to a method and device for processing point cloud content.

[Background Art]

Point cloud content is content represented by a point cloud, which is a set of points belonging to a coordinate system representing a three-dimensional space(or volume). The point cloud content may express media configured in three dimensions, and is used to provide various services such as virtual reality (VR), augmented reality (AR), mixed reality (MR), XR (Extended Reality), and self-driving services. However, tens of thousands to hundreds of thousands of point data are required to represent point cloud content. Therefore, there is a need for a method for efficiently processing a large amount of point data.

In other words, a high throughput is required to transmit and receive data of the point cloud. Accordingly, in the process of transmitting and receiving the point cloud data, in which encoding for compression and decoding for decompression are performed, the computational operation is complicated and time-consuming due to the large volume of the point cloud data.

[Disclosure]

[Technical Problem]

An object of the present disclosure devised to solve the above-described problems is to provide devices and methods for efficiently transmitting/receiving a point cloud.

Another object of the present disclosure is to provide devices and methods for addressing latency and encoding/decoding complexity.

Another object of the present disclosure is to provide devices and methods for providing efficient scalable services by encoding/decoding point cloud data based on layer groups.

Embodiments are not limited to the above-described objects, and the scope of the embodiments may cover other objects that can be inferred by those skilled in the art based on the entire contents of the present disclosure.

[Technical Solution]

To achieve these objects and other advantages and in accordance with the purpose of the disclosure, as embodied and broadly described herein, a method of transmitting point cloud data may include encoding geometry data of point cloud data, encoding attribute data of the point cloud data based on the geometry data, and transmitting the encoded geometry data, the encoded attribute data, and signaling information.

According to embodiments, the encoding of the geometry data may include recursively partitioning a bounding box of the point cloud data and generating an octree structure, and compressing geometry information based on the octree structure, wherein the octree structure may include a plurality of octree depths.

According to embodiments, a first octree depth among the octree depths may correspond to a root node, and a last octree depth among the octree depths may correspond to a leaf node. The encoded geometry data transmitted in the transmission may include information about octree depths ranging from the octree depth corresponding to the root node to a specific octree depth among the octree depths.

According to embodiments, the encoding of the attribute data may include generating one or more levels of detail (LoDs) based on the octree structure, and compressing the attribute data based on at least one of the one or more LoDs.

According to embodiments, the generating of the one or more LoDs may include mapping sampled nodes of one or more octree depths of the octree structure to a single LoD. An attribute of a specific node at an upper octree depth may be determined as an attribute of a sampled child node among child nodes at a lower octree depth.

According to embodiments, a sampling position for sampling one of the child nodes may be fixed or signaled in the signaling information depending on the octree depths.

According to embodiments, the signaling information may include at least one of information indicating a sampling position for at least one of the octree depths or information for inferring the sampling position for the at least one of the octree depths.

According to embodiments, a device for transmitting point cloud data may include a geometry encoder configured to encode geometry data of point cloud data, an attribute encoder configured to encode attribute data of the point cloud data based on the geometry data, and a transmitter configured to transmit the encoded geometry data, the encoded attribute data, and signaling information.

According to embodiments, the geometry encoder may include a geometry compressor configured to recursively partition a bounding box of the point cloud data and generate an octree structure, and compress the geometry data based on the octree structure,

According to embodiments, the octree structure may include a plurality of octree depths. A first octree depth among the octree depths may correspond to a root node, and a last octree depth among the octree depths may correspond to a leaf node. The encoded geometry data transmitted by the transmitter may include information about octree depths ranging from the octree depth corresponding to the root node to a specific octree depth among the octree depths.

According to embodiments, the attribute encoder may include an LoD generator configured to generate one or more LoDs based on the octree structure, and an attribute compressor configured to compress the attribute data based on at least one of the one or more LoDs.

According to embodiments, the LoD generator maps sampled nodes of one or more octree depths of the octree structure to a single LoD. An attribute of a specific node at an upper octree depth may be determined as an attribute of a sampled child node among child nodes at a lower octree depth.

According to embodiments, a sampling position for sampling one of the child nodes may be fixed or signaled in the signaling information depending on the octree depths.

According to embodiments, the signaling information may include at least one of information indicating a sampling position for at least one of the octree depths or information for inferring the sampling position for the at least one of the octree depths.

According to embodiments, a method of receiving point cloud data may include receiving encoded geometry data, encoded attribute data, and signaling information, decoding the encoded geometry data based on the signaling information, and decoding the encoded attribute data based on the geometry data and the signaling information.

According to embodiments, the decoding of the geometry data may include generating an octree structure based on the signaling information, and reconstructing the geometry data based on the octree structure. The octree structure may include a plurality of octree depths. The reconstructed geometry data may include information about octree depths ranging from an octree depth corresponding to a root node to a specific octree depth among the octree depths.

According to embodiments, the decoding of the attribute data may include generating one or more levels of detail (LoDs) based on the signaling information and the octree structure, and reconstructing the attribute data based on at least one of the one or more LoDs.

According to embodiments, the generating of the one or more LoDs may include mapping sampled nodes of one or more octree depths of the octree structure to a single LoD. An attribute of a specific node at an upper octree depth may be determined as an attribute of a sampled child node among child nodes at a lower octree depth.

According to embodiments, a sampling position for sampling one of the child nodes may be fixed or signaled in the signaling information depending on the octree depths.

According to embodiments, the signaling information may include at least one of information indicating a sampling position for at least one of the octree depths or information for inferring the sampling position for the at least one of the octree depths.

[Advantageous Effects]

Devices and methods according to embodiments may provide a quality point cloud service.

Devices and methods according to embodiments may achieve various video codec methods.

Devices and methods according to embodiments may provide universal point cloud content such as an autonomous driving service.

Devices and methods according to embodiments may perform space-adaptive partition of point cloud data for independent encoding and decoding of the point cloud data, thereby improving parallel processing and providing scalability.

Devices and methods according to embodiments may perform encoding and decoding by partitioning the point cloud data in units of tiles and/or slices, and signal necessary data therefor, thereby improving encoding and decoding performance of the point cloud.

A device and method according to embodiments may divide and transmit compressed data of point cloud data according to a predetermined criterion. In addition, when layered coding is used, compressed data may be divided and transmitted according to layers. Accordingly, the storage and transmission efficiency of the transmission device may increase.

According to embodiments, devices and methods may resolve geometry/attribute mismatches that may occur during partial decoding by changing the sampling positions of one or more octree depths required for LoD generation in the octree structure, by fixing the sampling positions in a specific order, or by explicitly signaling the positions. Accordingly, taking partial geometry into account, point cloud data may be encoded and/or decoded in a scalable manner, thereby enabling efficient compression and accurate reconstruction of the point cloud data.

[Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:

FIG. 1 shows an exemplary point cloud content providing system according to embodiments;
FIG. 2 is a block diagram illustrating a point cloud content providing operation according to embodiments;
FIG. 3 illustrates an exemplary point cloud encoder according to embodiments;
FIG. 4 shows an example of an octree and occupancy code according to embodiments;
FIG. 5 illustrates an example of point configuration in each LOD according to embodiments;
FIG. 6 illustrates an example of point configuration in each LOD according to embodiments;
FIG. 7 illustrates a point cloud decoder according to embodiments;
FIG. 8 illustrates a transmission device according to embodiments;
FIG. 9 illustrates a reception device according to embodiments;
FIG. 10 illustrates an exemplary structure operable in connection with point cloud data transmission/reception methods/devices according to embodiments;
FIG. 11 is a diagram illustrating an example of encoding, transmitting, and decoding point cloud data according to embodiments;
FIG. 12 is a diagram illustrating another example of encoding, transmitting, and decoding point cloud data according to embodiments;
FIG. 13 is a diagram illustrating another example of encoding, transmitting, and decoding point cloud data according to embodiments;
FIG. 14 is a diagram illustrating another example of encoding, transmitting, and decoding point cloud data according to embodiments;
FIG. 15 is a diagram illustrating an example of layer-based point cloud data configuration according to embodiments;
FIG. 16 is a diagram illustrating an example method of generating LoDs in an octree structure for full geometry/full attribute encoding/decoding according to embodiments;
FIGS. 17-(a) and 17-(b) are diagrams illustrating an example method of configuring layer groups in an octree structure according to embodiments;
FIG. 18 illustrates an example of performing scalable lifting LoD generation according to embodiments;
FIG. 19 is a diagram illustrating an example of performing partial decoding in an octree structure according to embodiments;
FIG. 20 illustrates a first embodiment of determining sampling positions for scalable lifting LoD generation according to the present disclosure;
FIG. 21 is a diagram illustrating an example of performing partial decoding in an octree structure according to the first embodiment;
FIG. 22 illustrates a second embodiment of determining a sampling position for scalable lifting LoD generation according to the present disclosure;
FIG. 23 is a diagram illustrating an example of performing partial decoding in an octree structure according to the second embodiment;
FIG. 24 illustrates a third embodiment of determining sampling positions for scalable lifting LoD generation according to the present disclosure;
FIG. 25 is a diagram illustrating an example of performing partial decoding in an octree structure according to the third embodiment;
FIG. 26 illustrates an example of a fourth embodiment of determining sampling positions for scalable lifting LoD generation according to the present disclosure;
FIG. 27 illustrates another example of the fourth embodiment of determining sampling positions for scalable lifting LoD generation according to the present disclosure;
FIG. 28 illustrates an example bitstream structure of point cloud data for transmission/reception according to embodiments;
FIG. 29 shows an example syntax structure of LoD generation-related information according to embodiments;
FIG. 30 shows an example syntax structure of an attribute parameter set according to embodiments;
FIG. 31 shows an example syntax structure of SEI according to embodiments;
FIG. 32 is a diagram illustrating another example of a point cloud data transmission device according to embodiments;
FIG. 33 is a diagram illustrating another example of a point cloud data reception device according to embodiments;

FIG. 34 is a flowchart illustrating a method of transmitting point cloud data according to embodiments; and
FIG. 35 is a flowchart illustrating a method of receiving point cloud data according to embodiments.

[Best Mode]

Reference will now be made in detail to the preferred embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details.

Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings.

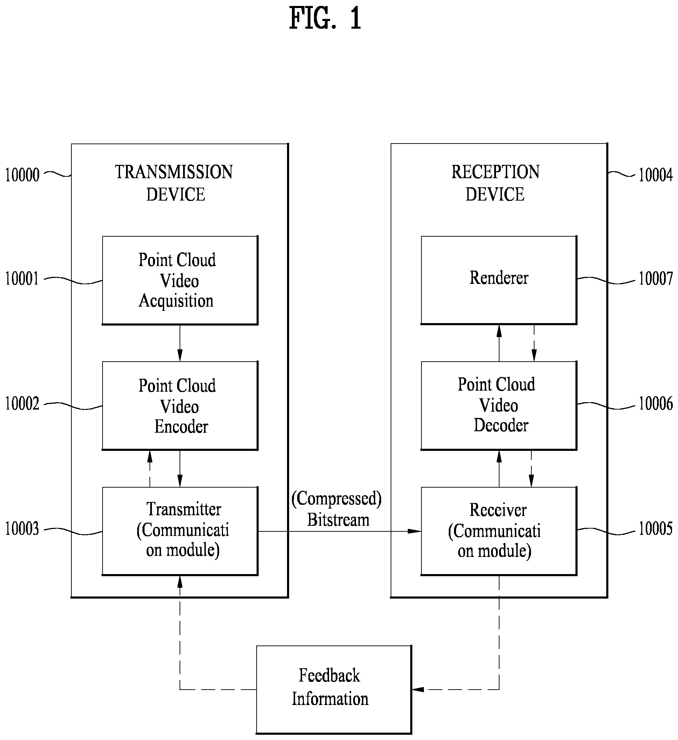

FIG. 1 shows an exemplary point cloud content providing system according to embodiments.

The point cloud content providing system illustrated in FIG. 1 may include a transmission device 10000 and a reception device 10004. The transmission device 10000 and the reception device 10004 are capable of wired or wireless communication to transmit and receive point cloud data.

The point cloud data transmission device 10000 according to the embodiments may secure and process point cloud video (or point cloud content) and transmit the same. According to embodiments, the transmission device 10000 may include a fixed station, a base transceiver system (BTS), a network, an artificial intelligence (AI) device and/or system, a robot, an AR/VR/XR device and/or server. According to embodiments, the transmission device 10000 may include a device, a robot, a vehicle, an AR/VR/XR device, a portable device, a home appliance, an Internet of Thing (IoT) device, and an AI device/server which are configured to perform communication with a base station and/or other wireless devices using a radio access technology (e.g., 5G New RAT (NR), Long Term Evolution (LTE)).

The transmission device 10000 according to the embodiments includes a point cloud video acquisition unit 10001, a point cloud video encoder 10002, and/or a transmitter (or communication module) 10003.

The point cloud video acquisition unit 10001 according to the embodiments acquires a point cloud video through a processing process such as capture, synthesis, or generation. The point cloud video is point cloud content represented by a point cloud, which is a set of points positioned in a 3D space, and may be referred to as point cloud video data, point cloud data, or the like. The point cloud video according to the embodiments may include one or more frames. One frame represents a still image/picture. Therefore, the point cloud video may include a point cloud image/frame/picture, and may be referred to as a point cloud image, frame, or picture.

The point cloud video encoder 10002 according to the embodiments encodes the acquired point cloud video data. The point cloud video encoder 10002 may encode the point cloud video data based on point cloud compression coding. The point cloud compression coding according to the embodiments may include geometry-based point cloud compression (G-PCC) coding and/or video-based point cloud compression (V-PCC) coding or next-generation coding. The point cloud compression coding according to the embodiments is not limited to the above-described embodiment. The point cloud video encoder 10002 may output a bitstream containing the encoded point cloud video data. The bitstream may contain not only the encoded point cloud video data, but also signaling information related to encoding of the point cloud video data.

The transmitter 10003 according to the embodiments transmits the bitstream containing the encoded point cloud video data. The bitstream according to the embodiments is encapsulated in a file or segment (e.g., a streaming segment), and is transmitted over various networks such as a broadcasting network and/or a broadband network. Although not shown in the figure, the transmission device 10000 may include an encapsulator (or an encapsulation module) configured to perform an encapsulation operation. According to embodiments, the encapsulator may be included in the transmitter 10003. According to embodiments, the file or segment may be transmitted to the reception device 10004 over a network, or stored in a digital storage medium (e.g., USB, SD, CD, DVD, Blu-ray, HDD, SSD, etc.). The transmitter 10003 according to the embodiments is capable of wired/wireless communication with the reception device 10004 (or the receiver 10005) over a network of 4G, 5G, 6G, etc. In addition, the transmitter may perform a necessary data processing operation according to the network system (e.g., a 4G, 5G or 6G communication network system). The transmission device 10000 may transmit the encapsulated data in an on-demand manner.

The reception device 10004 according to the embodiments includes a receiver 10005, a point cloud video decoder 10006, and/or a renderer 10007. According to embodiments, the reception device 10004 may include a device, a robot, a vehicle, an AR/VR/XR device, a portable device, a home appliance, an Internet of Things (IoT) device, and an AI device/server which are configured to perform communication with a base station and/or other wireless devices using a radio access technology (e.g., 5G New RAT (NR), Long Term Evolution (LTE)).

The receiver 10005 according to the embodiments receives the bitstream containing the point cloud video data or the file/segment in which the bitstream is encapsulated from the network or storage medium. The receiver 10005 may perform necessary data processing according to the network system (e.g., a communication network system of 4G, 5G, 6G, etc.). The receiver 10005 according to the embodiments may decapsulate the received file/segment and output a bitstream. According to embodiments, the receiver 10005 may include a decapsulator (or a decapsulation module) configured to perform a decapsulation operation. The decapsulator may be implemented as an element (or component) separate from the receiver 10005.

The point cloud video decoder 10006 decodes the bitstream containing the point cloud video data. The point cloud video decoder 10006 may decode the point cloud video data according to the method by which the point cloud video data is encoded (e.g., in a reverse process of the operation of the point cloud video encoder 10002). Accordingly, the point cloud video decoder 10006 may decode the point cloud video data by performing point cloud decompression coding, which is the reverse process to the point cloud compression. The point cloud decompression coding includes G-PCC coding.

The renderer 10007 renders the decoded point cloud video data. In one embodiment, the renderer 10007 may render the decoded point cloud video data according to a viewport or the like. The renderer 10007 may render not only the point cloud video data but also audio data to output point cloud content. According to embodiments, the renderer 10007 may include a display configured to display the point cloud content. According to embodiments, the display may be implemented as a separate device or component rather than being included in the renderer 10007.

The arrows indicated by dotted lines in the drawing represent a transmission path of feedback information acquired by the reception device 10004. The feedback information is information for reflecting interactivity with a user who consumes the point cloud content, and includes information about the user (e.g., head orientation information, viewport information, and the like). In particular, when the point cloud content is content for a service (e.g., self-driving service, etc.) that requires interaction with the user, the feedback information may be provided to the content transmitting side (e.g., the transmission device 10000) and/or the service provider. According to embodiments, the feedback information may be used in the reception device 10004 as well as the transmission device 10000, or may not be provided.

The head orientation information according to the embodiments may represent information about a position, orientation, angle, and motion of a user's head. The reception device 10004 according to the embodiments may calculate viewport information based on the head orientation information. The viewport information is information about a region of a point cloud video that the user is viewing (that is, a region that the user is currently viewing). That is, the viewport information is information about a region that the user is currently viewing in the point cloud video. In other words, the viewport or viewport region may represent a region that the user is viewing in the point cloud video. A viewpoint is a point that the user is viewing in the point cloud video, and may represent a center point of the viewport region. That is, the viewport is a region centered on a viewpoint, and the size and shape of the region may be determined by a field of view (FOV). Accordingly, the reception device 10004 may extract the viewport information based on a vertical or horizontal FOV supported by the device as well as the head orientation information. In addition, the reception device 10004 may perform gaze analysis or the like based on the head orientation information and/or the viewport information to determine the way the user consumes a point cloud video, a region at which the user gazes in the point cloud video, and the gaze time. According to embodiments, the reception device 10004 may transmit feedback information including the result of the gaze analysis to the transmission device 10000. According to embodiments, a device such as a VR/XR/AR/MR display may extract a viewport region based on the position/orientation of a user's head and a vertical or horizontal FOV supported by the device. According to embodiments, the head orientation information and the viewport information may be referred to as feedback information, signaling information, or metadata.

The feedback information according to the embodiments may be acquired in the rendering and/or display process. The feedback information may be secured by one or more sensors included in the reception device 10004. According to embodiments, the feedback information may be secured by the renderer 10007 or a separate external element (or device, component, or the like). The dotted lines in FIG. 1 represent a process of transmitting the feedback information secured by the renderer 10007. The feedback information may not only be transmitted to the transmitting side, but also be consumed at the receiving side. That is, the point cloud content providing system may process (encode/decode/render) point cloud data based on the feedback information. For example, the point cloud video decoder 10006 and the renderer 10007 may preferentially decode and render only the point cloud video for a region currently viewed by the user, based on the feedback information, namely, the head orientation information and/or the viewport information.

Furthermore, the reception device 10004 may transmit the feedback information to the transmission device 10000. The transmission device 10000 (or the point cloud video encoder 10002) may perform an encoding operation based on the feedback information. Accordingly, the point cloud content providing system may efficiently process necessary data (e.g., point cloud data corresponding to the user's head position) based on the feedback information rather than processing (encoding/decoding) the entire point cloud data, and provide point cloud content to the user.

According to embodiments, the transmission device 10000 may be called an encoder, a transmission device, a transmitter, transmission system or the like, and the reception device 10004 may be called a decoder, a receiving device, a receiver, receiving system or the like.

The point cloud data processed in the point cloud content providing system of FIG. 1 according to embodiments (through a series of processes of acquisition/encoding/transmission/decoding/rendering) may be referred to as point cloud content data or point cloud video data. According to embodiments, the point cloud content data may be used as a concept covering metadata or signaling information related to the point cloud data.

The elements of the point cloud content providing system illustrated in FIG. 1 may be implemented by hardware, software, a processor, and/or a combination thereof.

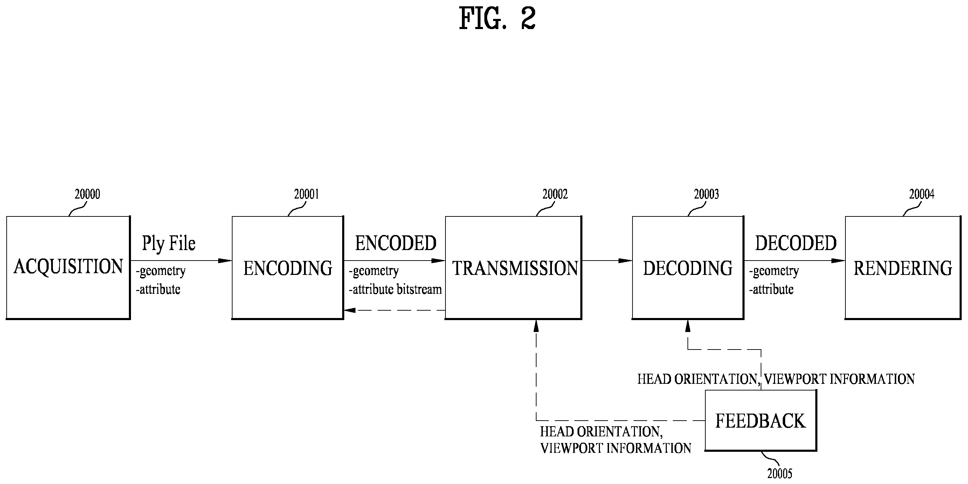

FIG. 2 is a block diagram illustrating a point cloud content providing operation according to embodiments.

The block diagram of FIG. 2 shows the operation of the point cloud content providing system described in FIG. 1. As described above, the point cloud content providing system may process point cloud data based on point cloud compression coding (e.g., G-PCC).

The point cloud content providing system according to the embodiments (e.g., the point cloud transmission device 10000 or the point cloud video acquisition unit 10001) may acquire a point cloud video (20000). The point cloud video is represented by a point cloud belonging to a coordinate system for expressing a 3D space. The point cloud video according to the embodiments may include a Ply (Polygon File format or the Stanford Triangle format) file. When the point cloud video has one or more frames, the acquired point cloud video may include one or more Ply files. The Ply files contain point cloud data, such as point geometry and/or attributes. The geometry includes positions of points. The position of each point may be represented by parameters (e.g., values of the X, Y, and Z axes) representing a three-dimensional coordinate system (e.g., a coordinate system composed of X, Y and Z axes). The attributes include attributes of points (e.g., information about texture, color (in YCbCr or RGB), reflectance r, transparency, etc. of each point). A point has one or more attributes. For example, a point may have an attribute that is a color, or two attributes that are color and reflectance. According to embodiments, the geometry may be called positions, geometry information, geometry data, position information, position data, or the like, and the attribute may be called attributes, attribute information, attribute data, or the like. The point cloud content providing system (e.g., the point cloud transmission device 10000 or the point cloud video acquisition unit 10001) may secure point cloud data from information (e.g., depth information, color information, etc.) related to the acquisition process of the point cloud video.

The point cloud content providing system (e.g., the transmission device 10000 or the point cloud video encoder 10002) according to the embodiments may encode the point cloud data (20001). The point cloud content providing system may encode the point cloud data based on point cloud compression coding. As described above, the point cloud data may include the geometry information and attribute information about a point. Accordingly, the point cloud content providing system may perform geometry encoding of encoding the geometry and output a geometry bitstream. The point cloud content providing system may perform attribute encoding of encoding attributes and output an attribute bitstream. According to embodiments, the point cloud content providing system may perform the attribute encoding based on the geometry encoding. The geometry bitstream and the attribute bitstream according to the embodiments may be multiplexed and output as one bitstream. The bitstream according to the embodiments may further contain signaling information related to the geometry encoding and attribute encoding.

The point cloud content providing system (e.g., the transmission device 10000 or the transmitter 10003) according to the embodiments may transmit the encoded point cloud data

(20002). As illustrated in FIG. 1, the encoded point cloud data may be represented by a geometry bitstream and an attribute bitstream. In addition, the encoded point cloud data may be transmitted in the form of a bitstream together with signaling information related to encoding of the point cloud data (e.g., signaling information related to the geometry encoding and the attribute encoding). The point cloud content providing system may encapsulate a bitstream that carries the encoded point cloud data and transmit the same in the form of a file or segment.

The point cloud content providing system (e.g., the reception device 10004 or the receiver 10005) according to the embodiments may receive the bitstream containing the encoded point cloud data. In addition, the point cloud content providing system (e.g., the reception device 10004 or the receiver 10005) may demultiplex the bitstream.

The point cloud content providing system (e.g., the reception device 10004 or the point cloud video decoder 10005) may decode the encoded point cloud data (e.g., the geometry bitstream, the attribute bitstream) transmitted in the bitstream. The point cloud content providing system (e.g., the reception device 10004 or the point cloud video decoder 10005) may decode the point cloud video data based on the signaling information related to encoding of the point cloud video data contained in the bitstream. The point cloud content providing system (e.g., the reception device 10004 or the point cloud video decoder 10005) may decode the geometry bitstream to reconstruct the positions (geometry) of points. The point cloud content providing system may reconstruct the attributes of the points by decoding the attribute bitstream based on the reconstructed geometry. The point cloud content providing system (e.g., the reception device 10004 or the point cloud video decoder 10005) may reconstruct the point cloud video based on the positions according to the reconstructed geometry and the decoded attributes.

The point cloud content providing system according to the embodiments (e.g., the reception device 10004 or the renderer 10007) may render the decoded point cloud data (20004). The point cloud content providing system (e.g., the reception device 10004 or the renderer 10007) may render the geometry and attributes decoded through the decoding process, using various rendering methods. Points in the point cloud content may be rendered to a vertex having a certain thickness, a cube having a specific minimum size centered on the corresponding vertex position, or a circle centered on the corresponding vertex position. All or part of the rendered point cloud content is provided to the user through a display (e.g., a VR/AR display, a general display, etc.).

The point cloud content providing system (e.g., the reception device 10004) according to the embodiments may secure feedback information (20005). The point cloud content providing system may encode and/or decode point cloud data based on the feedback information. The feedback information and the operation of the point cloud content providing system according to the embodiments are the same as the feedback information and the operation described with reference to FIG. 1, and thus a detailed description thereof is omitted.

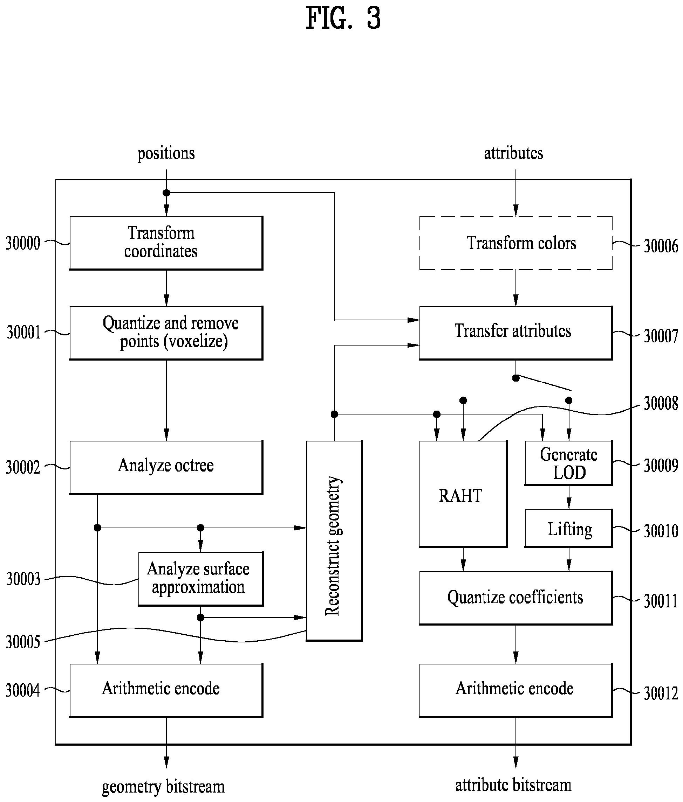

FIG. 3 illustrates an exemplary point cloud encoder according to embodiments.

FIG. 3 shows an example of the point cloud video encoder 10002 of FIG. 1. The point cloud encoder reconstructs and encodes point cloud data (e.g., positions and/or attributes of the points) to adjust the quality of the point cloud content (to, for example, lossless, lossy, or near-lossless) according to the network condition or applications. When the overall size of the point cloud content is large (e.g., point cloud content of 60 Gbps is given for 30 fps), the point cloud content providing system may fail to stream the content in real time. Accordingly, the point cloud content providing system may reconstruct the point cloud content based on the maximum target bitrate to provide the same in accordance with the network environment or the like.

As described with reference to FIGS. 1 and 2, the point cloud encoder may perform geometry encoding and attribute encoding. The geometry encoding is performed before the attribute encoding.

The point cloud video encoder according to the embodiments includes a coordinate transformer (Transform coordinates) 30000, a quantizer (Quantize and remove points (voxelize)) 30001, an octree analyzer (Analyze octree) 30002, a surface approximation analyzer (Analyze surface approximation) 30003, an arithmetic encoder (Arithmetic encode) 30004, a geometry reconstructor (Reconstruct geometry) 30005, a color transformer (Transform colors) 30006, an attribute transformer (Transfer attributes) 30007, a RAHT transformer 30008, an LOD generator (Generated LOD) 30009, a lifting transformer (Lifting) 30010, a coefficient quantizer (Quantize coefficients) 30011, and/or an arithmetic encoder (Arithmetic encode) 30012. In the point cloud encoder of FIG. 3, the coordinate transformer 30000, the quantizer 30001, the octree analyzer 30002, the surface approximation analyzer 30003, the arithmetic encoder 30004, and the geometry reconstructor 30005 may be grouped together and referred to as a geometry encoder. The color transformer 30006, the attribute transformer 30007, the RAHT transformer 30008, the LOD generator 30009, the lifting transformer 30010, the coefficient quantizer 30011, and/or the arithmetic encoder 30012 may be grouped together and referred to as an attribute encoder.

The coordinate transformer 30000, the quantizer 30001, the octree analyzer 30002, the surface approximation analyzer 30003, the arithmetic encoder 30004, and the geometry reconstructor 30005 may perform geometry encoding. The geometry encoding according to the embodiments may include octree geometry coding, predictive tree geometry coding, direct coding, trisoup geometry encoding, and entropy encoding. The direct coding and trisoup geometry encoding are applied selectively or in combination. The geometry encoding is not limited to the above-described example.

As shown in the figure, the coordinate transformer 30000 according to the embodiments receives positions and transforms the same into coordinates. For example, the positions may be transformed into position information in a three-dimensional space (e.g., a three-dimensional space represented by an XYZ coordinate system). The position information in the three-dimensional space according to the embodiments may be referred to as geometry information.

The quantizer 30001 according to the embodiments quantizes the geometry. For example, the quantizer 30001 may quantize the points based on a minimum position value of all points (e.g., a minimum value on each of the X, Y, and Z axes). The quantizer 30001 performs a quantization operation of multiplying the difference between the minimum position value and the position value of each point by a preset quantization scale value and then finding the nearest integer value by rounding the value obtained through the multiplication. Thus, one or more points may have the same quantized position (or position value). The quantizer 30001 according to the embodiments performs voxelization based on the quantized positions to reconstruct quantized points. As in the case of a pixel, which is the minimum unit containing 2D image/video information, points of point cloud content (or 3D point cloud video) according to the embodiments may be included in one or more voxels. The term voxel, which is a compound of volume and pixel, refers to a 3D cubic space generated when a 3D space is divided into units (unit=1.0) based on the axes representing the 3D space (e.g., X-axis, Y-axis, and Z-axis). The quantizer 30001 may match groups of points in the 3D space with voxels. According to embodiments, one voxel may include only one point. According to embodiments, one voxel may include one or more points. In order to express one voxel as one point, the position of the center of a voxel may be set based on the positions of one or more points included in the voxel. In this case, attributes of all positions included in one voxel may be combined and assigned to the voxel.

The octree analyzer 30002 according to the embodiments performs octree geometry coding (or octree coding) to present voxels in an octree structure. The octree structure represents points matched with voxels, based on the octal tree structure.

The surface approximation analyzer 30003 according to the embodiments may analyze and approximate the octree. The octree analysis and approximation according to the embodiments is a process of analyzing a region containing a plurality of points to efficiently provide octree and voxelization.

The arithmetic encoder 30004 according to the embodiments performs entropy encoding on the octree and/or the approximated octree. For example, the encoding scheme includes arithmetic encoding. As a result of the encoding, a geometry bitstream is generated.

The color transformer 30006, the attribute transformer 30007, the RAHT transformer 30008, the LOD generator 30009, the lifting transformer 30010, the coefficient quantizer 30011, and/or the arithmetic encoder 30012 perform attribute encoding. As described above, one point may have one or more attributes. The attribute encoding according to the embodiments is equally applied to the attributes that one point has. However, when an attribute (e.g., color) includes one or more elements, attribute encoding is independently applied to each element. The attribute encoding according to the embodiments includes color transform coding, attribute transform coding, region adaptive hierarchical transform (RAHT) coding, interpolation-based hierarchical nearest-neighbor prediction (prediction transform) coding, and interpolation-based hierarchical nearest-neighbor prediction with an update/lifting step (lifting transform) coding. Depending on the point cloud content, the RAHT coding, the prediction transform coding and the lifting transform coding described above may be selectively used, or a combination of one or more of the coding schemes may be used. The attribute encoding according to the embodiments is not limited to the above-described example.

The color transformer 30006 according to the embodiments performs color transform coding of transforming color values (or textures) included in the attributes. For example, the color transformer 30006 may transform the format of color information (for example, from RGB to YCbCr). The operation of the color transformer 30006 according to embodiments may be optionally applied according to the color values included in the attributes.

The geometry reconstructor 30005 according to the embodiments reconstructs (decompresses) the octree and/or the approximated octree. The geometry reconstructor 30005 reconstructs the octree/voxels based on the result of analyzing the distribution of points. The reconstructed octree/voxels may be referred to as reconstructed geometry (restored geometry).

The attribute transformer 30007 according to the embodiments performs attribute transformation to transform the attributes based on the reconstructed geometry and/or the positions on which geometry encoding is not performed. As described above, since the attributes are dependent on the geometry, the attribute transformer 30007 may transform the attributes based on the reconstructed geometry information. For example, based on the position value of a point included in a voxel, the attribute transformer 30007 may transform the attribute of the point at the position. As described above, when the position of the center of a voxel is set based on the positions of one or more points included in the voxel, the attribute transformer 30007 transforms the attributes of the one or more points. When the trisoup geometry encoding is performed, the attribute transformer 30007 may transform the attributes based on the trisoup geometry encoding.

The attribute transformer 30007 may perform the attribute transformation by calculating the average of attributes or attribute values of neighboring points (e.g., color or reflectance of each point) within a specific position/radius from the position (or position value) of the center of each voxel. The attribute transformer 30007 may apply a weight according to the distance from the center to each point in calculating the average. Accordingly, each voxel has a position and a calculated attribute (or attribute value).

The attribute transformer 30007 may search for neighboring points existing within a specific position/radius from the position of the center of each voxel based on the K-D tree or the Morton code. The K-D tree is a binary search tree and supports a data structure capable of managing points based on the positions such that nearest neighbor search (NNS) can be performed quickly. The Morton code is generated by presenting coordinates (e.g., (x, y, z)) representing 3D positions of all points as bit values and mixing the bits. For example, when the coordinates representing the position of a point are (5, 9, 1), the bit values for the coordinates are (0101, 1001, 0001). Mixing the bit values according to the bit index in order of z, y, and x yields 010001000111. This value is expressed as a decimal number of 1095. That is, the Morton code value of the point having coordinates (5, 9, 1) is 1095. The attribute transformer 30007 may order the points based on the Morton code values and perform NNS through a depth-first traversal process. After the attribute transformation operation, the K-D tree or the Morton code is used when the NNS is needed in another transformation process for attribute coding.

As shown in the figure, the transformed attributes are input to the RAHT transformer 40008 and/or the LOD generator 30009.

The RAHT transformer 30008 according to the embodiments performs RAHT coding for predicting attribute information based on the reconstructed geometry information. For example, the RAHT transformer 30008 may predict attribute information of a node at a higher level in the octree based on the attribute information associated with a node at a lower level in the octree.

The LOD generator 30009 according to the embodiments generates a level of detail (LOD) to perform prediction transform coding. The LOD according to the embodiments is a degree of detail of point cloud content. As the LOD value decrease, it indicates that the detail of the point cloud content is degraded. As the LOD value increases, it indicates that the detail of the point cloud content is enhanced. Points may be classified by the LOD.

The lifting transformer 30010 according to the embodiments performs lifting transform coding of transforming the attributes a point cloud based on weights. As described above, lifting transform coding may be optionally applied.

The coefficient quantizer 30011 according to the embodiments quantizes the attribute-coded attributes based on coefficients.

The arithmetic encoder 30012 according to the embodiments encodes the quantized attributes based on arithmetic coding.

Although not shown in the figure, the elements of the point cloud encoder of FIG. 3 may be implemented by hardware including one or more processors or integrated circuits configured to communicate with one or more memories included in the point cloud providing device, software, firmware, or a combination thereof. The one or more processors may perform at least one of the operations and/or functions of the elements of the point cloud encoder of FIG. 3 described above. Additionally, the one or more processors may operate or execute a set of software programs and/or instructions for performing the operations and/or functions of the elements of the point cloud encoder of FIG. 3. The one or more memories according to the embodiments may include a high speed random access memory, or include a non-volatile memory (e.g., one or more magnetic disk storage devices, flash memory devices, or other non-volatile solid-state memory devices).

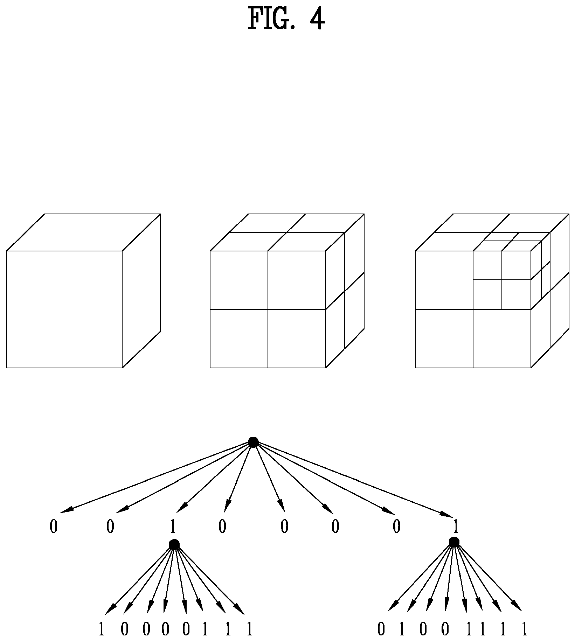

FIG. 4 shows an example of an octree and occupancy code according to embodiments.

As described with reference to FIGS. 1 to 3, the point cloud content providing system (point cloud video encoder 10002) or the point cloud encoder (e.g., the octree analyzer 30002) performs octree geometry coding (or octree coding) based on an octree structure to efficiently manage the region and/or position of the voxel.

The upper part of FIG. 4 shows an octree structure. The 3D space of the point cloud content according to the embodiments is represented by axes (e.g., X-axis, Y-axis, and Z-axis) of the coordinate system. The octree structure is created by recursive subdividing of a cubical axis-aligned bounding box defined by two poles $(0, 0, 0)$ and $(2^d, 2^d, 2^d)$. Here, 2d may be set to a value constituting the smallest bounding box surrounding all points of the point cloud content (or point cloud video). Here, d denotes the depth of the octree. The value of d is determined in the following equation. In the following equation, $(x^{int}_n, y^{int}_n, z^{int}_n)$ denotes the positions (or position values) of quantized points.

$$d = Ceil\left(Log2\left(Max\left(x^{int}_n, y^{int}_n, z^{int}_n, n = 1, \ldots, N\right) + 1\right)\right)$$

As shown in the middle of the upper part of FIG. 4, the entire 3D space may be divided into eight spaces according to partition. Each divided space is represented by a cube with six faces. As shown in the upper right of FIG. 4, each of the eight spaces is divided again based on the axes of the coordinate system (e.g., X-axis, Y-axis, and Z-axis). Accordingly, each space is divided into eight smaller spaces. The divided smaller space is also represented by a cube with six faces. This partitioning scheme is applied until the leaf node of the octree becomes a voxel.

The lower part of FIG. 4 shows an octree occupancy code. The occupancy code of the octree is generated to indicate whether each of the eight divided spaces generated by dividing one space contains at least one point. Accordingly, a single occupancy code is represented by eight child nodes. Each child node represents the occupancy of a divided space, and the child node has a value in 1 bit. Accordingly, the occupancy code is represented as an 8-bit code. That is, when at least one point is contained in the space corresponding to a child node, the node is assigned a value of 1. When no point is contained in the space corresponding to the child node (the space is empty), the node is assigned a value of 0. Since the occupancy code shown in FIG. 4 is 00100001, it indicates that the spaces corresponding to the third child node and the eighth child node among the eight child nodes each contain at least one point. As shown in the figure, each of the third child node and the eighth child node has eight child nodes, and the child nodes are represented by an 8-bit occupancy code. The figure shows that the occupancy code of the third child node is 10000111, and the occupancy code of the eighth child node is 01001111. The point cloud encoder (e.g., the arithmetic encoder 30004) according to the embodiments may perform entropy encoding on the occupancy codes. In order to increase the compression efficiency, the point cloud encoder may perform intra/inter-coding on the occupancy codes. The reception device (e.g., the reception device 10004 or the point cloud video decoder 10006) according to the embodiments reconstructs the octree based on the occupancy codes.

The point cloud encoder (e.g., the point cloud encoder of FIG. 4 or the octree analyzer 30002) according to the embodiments may perform voxelization and octree coding to store the positions of points. However, points are not always evenly distributed in the 3D space, and accordingly there may be a specific region in which fewer points are present. Accordingly, it is inefficient to perform voxelization for the entire 3D space. For example, when a specific region contains few points, voxelization does not need to be performed in the specific region.

Accordingly, for the above-described specific region (or a node other than the leaf node of the octree), the point cloud encoder according to the embodiments may skip voxelization and perform direct coding to directly code the positions of points included in the specific region. The coordinates of a direct coding point according to the embodiments are referred to as direct coding mode (DCM). The point cloud encoder according to the embodiments may also perform trisoup geometry encoding, which is to reconstruct the positions of the points in the specific region (or node) based on voxels, based on a surface model. The trisoup geometry encoding is geometry encoding that represents an object as a series of triangular meshes. Accordingly, the point cloud decoder may generate a point cloud from the mesh surface. The direct coding and trisoup geometry encoding according to the embodiments may be selectively performed. In addition, the direct coding and trisoup geometry encoding according to the embodiments may be performed in combination with octree geometry coding (or octree coding).

To perform direct coding, the option to use the direct mode for applying direct coding should be activated. A node to which direct coding is to be applied is not a leaf node, and points less than a threshold should be present within a specific node. In addition, the total number of points to which direct coding is to be applied should not exceed a preset threshold. When the conditions above are satisfied, the point cloud encoder (or the arithmetic encoder 30004) according to the embodiments may perform entropy coding on the positions (or position values) of the points.

The point cloud encoder (e.g., the surface approximation analyzer 30003) according to the embodiments may determine a specific level of the octree (a level less than the depth d of the octree), and the surface model may be used staring with that level to perform trisoup geometry encoding to reconstruct the positions of points in the region of the node based on voxels (Trisoup mode). The point cloud encoder according to the embodiments may specify a level at which trisoup geometry encoding is to be applied. For example, when the specific level is equal to the depth of the octree, the point cloud encoder does not operate in the trisoup mode. In other words, the point cloud encoder according to the embodiments may operate in the trisoup mode only when the specified level is less than the value of depth of the octree. The 3D cube region of the nodes at the specified level according to the embodiments is called a block. One block may include one or more voxels. The block or voxel may correspond to a brick. Geometry is represented as a surface within each block. The surface according to embodiments may intersect with each edge of a block at most once.

One block has 12 edges, and accordingly there are at least 12 intersections in one block. Each intersection is called a vertex (or apex). A vertex present along an edge is detected when there is at least one occupied voxel adjacent to the edge among all blocks sharing the edge. The occupied voxel according to the embodiments refers to a voxel containing a point. The position of the vertex detected along the edge is the average position along the edge of all voxels adjacent to the edge among all blocks sharing the edge.

Once the vertex is detected, the point cloud encoder according to the embodiments may perform entropy encoding on the starting point (x, y, z) of the edge, the direction vector ($\Delta$x, $\Delta$y, $\Delta$z) of the edge, and the vertex position value (relative position value within the edge). When the trisoup geometry encoding is applied, the point cloud encoder according to the embodiments (e.g., the geometry reconstructor 30005) may generate restored geometry (reconstructed geometry) by performing the triangle reconstruction, up-sampling, and voxelization processes.

The vertices positioned at the edge of the block determine a surface that passes through the block. The surface according to the embodiments is a non-planar polygon. In the triangle reconstruction process, a surface represented by a triangle is reconstructed based on the starting point of the edge, the direction vector of the edge, and the position values of the vertices. The triangle reconstruction process is performed by: i) calculating the centroid value of each vertex, ii) subtracting the center value from each vertex value, and iii) estimating the sum of the squares of the values obtained by the subtraction.

$$① \begin{bmatrix} \mu_x \\ \mu_y \\ \mu_z \end{bmatrix} = \frac{1}{n} \sum_{i=1}^{n} \begin{bmatrix} x_i \\ y_i \\ z_i \end{bmatrix} \quad ② \begin{bmatrix} \bar{x}_i \\ \bar{y}_i \\ \bar{z}_i \end{bmatrix} = \begin{bmatrix} x_i \\ y_i \\ z_i \end{bmatrix} - \begin{bmatrix} \mu_x \\ \mu_y \\ \mu_z \end{bmatrix} \quad ③ \begin{bmatrix} \sigma_x^2 \\ \sigma_y^2 \\ \sigma_z^2 \end{bmatrix} = \sum_{i=1}^{n} \begin{bmatrix} \bar{x}_i^2 \\ \bar{y}_i^2 \\ \bar{z}_i^2 \end{bmatrix}$$

The minimum value of the sum is estimated, and the projection process is performed according to the axis with the minimum value. For 'example, when the element x is the minimum, each vertex is projected on the x-axis with respect to the center of the block, and projected on the (y, z) plane. When the values obtained through projection on the (y, z) plane are (ai, bi), the value of $\theta$ is estimated through atan2(bi, ai), and the vertices are ordered based on the value of $\theta$. The table 1 below shows a combination of vertices for creating a triangle according to the number of the vertices. The vertices are ordered from 1 to n. The table 1 below shows that for four vertices, two triangles may be constructed according to combinations of vertices. The first triangle may consist of vertices 1, 2, and 3 among the ordered vertices, and the second triangle may consist of vertices 3, 4, and 1 among the ordered vertices.

[Table 1]

| [Table 1] Triangles formed from vertices ordered 1,...,n | |
|---|---|
| n | Triangles |
| 3 | (1,2,3) |
| 4 | (1,2,3), (3,4,1) |
| 5 | (1,2,3), (3,4,5), (5,1,3) |
| 6 | (1,2,3), (3,4,5), (5,6,1), (1,3,5) |
| 7 | (1,2,3), (3,4,5), (5,6,7), (7,1,3), (3,5,7) |
| 8 | (1,2,3), (3,4,5), (5,6,7), (7,8,1), (1,3,5), (5,7,1) |
| 9 | (1,2,3), (3,4,5), (5,6,7), (7,8,9), (9,1,3), (3,5,7), (7,9,3) |
| 10 | (1,2,3), (3,4,5), (5,6,7), (7,8,9), (9,10,1), (1,3,5), (5,7,9), (9,1,5) |
| 11 | (1,2,3), (3,4,5), (5,6,7), (7,8,9), (9,10,11), (11,1,3), (3,5,7), (7,9,11), (11,3,7) |
| 12 | (1,2,3), (3,4,5), (5,6,7), (7,8,9), (9,10,11), (11,12,1), (1,3,5), (5,7,9), (9,11,1), (1,5,9) |

The upsampling process is performed to add points in the middle along the edge of the triangle and perform voxelization. The added points are generated based on the upsampling factor and the width of the block. The added points are called refined vertices. The point cloud encoder according to the embodiments may voxelize the refined vertices. In addition, the point cloud encoder may perform attribute encoding based on the voxelized positions (or position values).

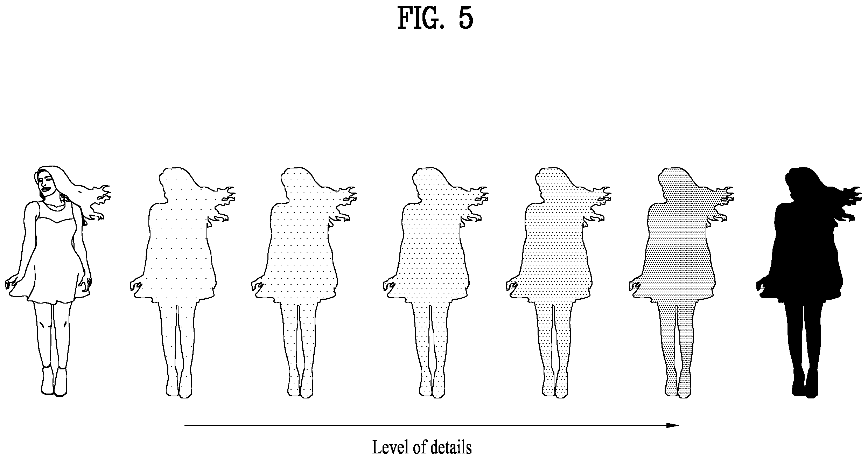

FIG. 5 illustrates an example of point configuration in each LOD according to embodiments.

As described with reference to FIGS. 1 to 4, encoded geometry is reconstructed (decompressed) before attribute encoding is performed. When direct coding is applied, the geometry reconstruction operation may include changing the placement of direct coded points (e.g., placing the direct coded points in front of the point cloud data). When trisoup geometry encoding is applied, the geometry reconstruction process is performed through triangle reconstruction, up-sampling, and voxelization. Since the attribute depends on the geometry, attribute encoding is performed based on the reconstructed geometry.

The point cloud encoder (e.g., the LOD generator 30009) may classify (or reorganize) points by LOD. The figure shows the point cloud content corresponding to LODs. The leftmost picture in the figure represents original point cloud content. The second picture from the left of the figure represents distribution of the points in the lowest LOD, and the rightmost picture in the figure represents distribution of the points in the highest LOD. That is, the points in the lowest LOD are sparsely distributed, and the points in the highest LOD are densely distributed. That is, as the LOD rises in the direction pointed by the arrow indicated at the bottom of the figure, the space (or distance) between points is narrowed.

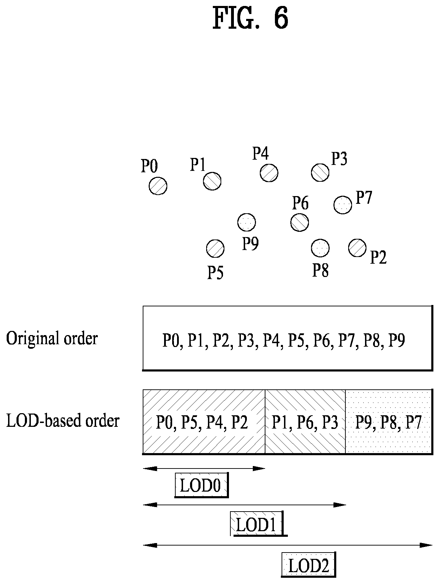

FIG. 6 illustrates an example of point configuration for each LOD according to embodiments.

As described with reference to FIGS. 1 to 5, the point cloud content providing system, or the point cloud encoder (e.g., the point cloud video encoder 10002, the point cloud encoder of FIG. 3, or the LOD generator 30009) may generates an LOD. The LOD is generated by reorganizing the points into a set of refinement levels according to a set LOD distance value (or a set of Euclidean distances). The LOD generation process is performed not only by the point cloud encoder, but also by the point cloud decoder.

The upper part of FIG. 6 shows examples (P0 to P9) of points of the point cloud content distributed in a 3D space. In FIG. 6, the original order represents the order of points P0 to P9 before LOD generation. In FIG. 6, the LOD based order represents the order of points according to the LOD generation. Points are reorganized by LOD. Also, a high LOD contains the points belonging to lower LODs. As shown in FIG. 6, LOD0 contains P0, P5, P4 and P2. LOD1 contains the points of LOD0, P1, P6 and P3. LOD2 contains the points of LOD0, the points of LOD1, P9, P8 and P7.

As described with reference to FIG. 3, the point cloud encoder according to the embodiments may perform prediction transform coding, lifting transform coding, and RAHT transform coding selectively or in combination.

The point cloud encoder according to the embodiments may generate a predictor for points to perform prediction transform coding for setting a predicted attribute (or predicted attribute value) of each point. That is, N predictors may be generated for N points. The predictor according to the embodiments may calculate a weight (=1/distance) based on the LOD value of each point, indexing information about neighboring points present within a set distance for each LOD, and a distance to the neighboring points.

The predicted attribute (or attribute value) according to the embodiments is set to the average of values obtained by multiplying the attributes (or attribute values) (e.g., color, reflectance, etc.) of neighbor points set in the predictor of each point by a weight (or weight value) calculated based on the distance to each neighbor point. The point cloud encoder according to the embodiments (e.g., the coefficient quantizer 30011) may quantize and inversely quantize the residuals (which may be called residual attributes, residual attribute values, attribute prediction residuals, or the like) obtained by subtracting a predicted attribute (or attribute value) of each point from the attribute (attribute value) of each point. The quantization process is shown in Tables 2 and 3 below.

[Table 2]

| int PCCQuantization(int value, int quantStep) { |
|---|
| if( value >=0) { |
| return floor(value / quantStep + 1.0 / 3.0); |
| } else { |
| return -floor(-value / quantStep + 1.0 / 3.0); |
| } |
| } |

[Table 3]

| int PCCInverseQuantization(int value, int quantStep) { |
|---|
| if( quantStep ==0) { |
| return value; |
| } else { |
| return value * quantStep; |
| } |
| } |

When the predictor of each point has neighbor points, the point cloud encoder (e.g., the arithmetic encoder 30012) according to the embodiments may perform entropy coding on the quantized and inversely quantized residual values as described above. When the predictor of each point has no neighbor point, the point cloud encoder according to the embodiments (e.g., the arithmetic encoder 30012) may perform entropy coding on the attributes of the corresponding point without performing the above-described operation.

The point cloud encoder according to the embodiments (e.g., the lifting transformer 30010) may generate a predictor of each point, set the calculated LOD and register neighbor points in the predictor, and set weights according to the distances to neighbor points to perform lifting transform coding. The lifting transform coding according to the embodiments is similar to the above-described prediction transform coding, but differs therefrom in that weights are cumulatively applied to attribute values. The process of cumulatively applying weights to the attribute values according to embodiments is configured as follows.

1) Create an array Quantization Weight (QW) for storing the weight value of each point. The initial value of all elements of QW is 1.0. Multiply the QW values of the predictor indexes of the neighbor nodes registered in the predictor by the weight of the predictor of the current point, and add the values obtained by the multiplication.

2) Lift prediction process: Subtract the value obtained by multiplying the attribute value of the point by the weight from the existing attribute value to calculate a predicted attribute value.

3) Create temporary arrays called updateweight and update and initialize the temporary arrays to zero.

4) Cumulatively add the weights calculated by multiplying the weights calculated for all predictors by a weight stored in the QW corresponding to a predictor index to the updateweight array as indexes of neighbor nodes. Cumulatively add, to the update array, a value obtained by multiplying the attribute value of the index of a neighbor node by the calculated weight.

5) Lift update process: Divide the attribute values of the update array for all predictors by the weight value of the updateweight array of the predictor index, and add the existing attribute value to the values obtained by the division.

6) Calculate predicted attributes by multiplying the attribute values updated through the lift update process by the weight updated through the lift prediction process (stored in the QW) for all predictors. The point cloud encoder (e.g., coefficient quantizer 30011) according to the embodiments quantizes the predicted attribute values. In addition, the point cloud encoder (e.g., the arithmetic encoder 30012) performs entropy coding on the quantized attribute values.

The point cloud encoder (for example, the RAHT transformer 30008) according to the embodiments may perform RAHT transform coding in which attributes of nodes of a higher level are predicted using the attributes associated with nodes of a lower level in the octree. RAHT transform coding is an example of attribute intra coding through an octree backward scan. The point cloud encoder according to the embodiments scans the entire region from the voxel and repeats the merging process of merging the voxels into a larger block at each step until the root node is reached. The merging process according to the embodiments is performed only on the occupied nodes. The merging process is not performed on the empty node. The merging process is performed on an upper node immediately above the empty node.

The equation below represents a RAHT transformation matrix. In the equation, $g_{l\,x,y,z}$ denotes the average attribute value of voxels at level l. $g_{l\,x,y,z}$ may be calculated based on $g_{l+1\,2x,y,z}$ and $g_{l+1\,2x+1,y,z}$. The weights for $g_{l\,2x,y,z}$ and $g_{l\,2x+1,y,z}$ are $w1 = W_{l2x,y,z}$ and $w2 = w_{l2x+1,y,z}$ .

$$\begin{bmatrix} g_{l-1\,x,y,z} \\ h_{l-1\,x,y,z} \end{bmatrix} = T_{w1\,w2} \begin{bmatrix} g_{l\,2x,y,z} \\ g_{l\,2x+1,y,z} \end{bmatrix}, \quad T_{w1\,w2} = \frac{1}{\sqrt{w1+w2}} \begin{bmatrix} \sqrt{w1} & \sqrt{w2} \\ -\sqrt{w2} & \sqrt{w1} \end{bmatrix}$$

Here, $g_{l-1\,x,y,z}$ is a low-pass value and is used in the merging process at the next higher level. $h_{l-1\,x,y,z}$ denotes high-pass coefficients. The high.0000000000-pass coefficients at each step are quantized and subjected to entropy coding (e.g., encoding by the arithmetic encoder 30012). The weights are calculated as $w_{l-1x,y,z} = w_{l2x,y,z} + w_{l2x+1,y,z}$ . The root node is created through the $g_{1_{0,0,0}}$ and $g_{1\,0,0,1}$ as follows.

$$\begin{bmatrix} gDC \\ h_{0_{0,0,0}} \end{bmatrix} = T_{w1000\,w1001} \begin{bmatrix} g_{1\,0,0,0z} \\ g_{1_{0,0,1}} \end{bmatrix}$$

The value of gDC is also quantized and subjected to entropy coding like the high-pass coefficients.

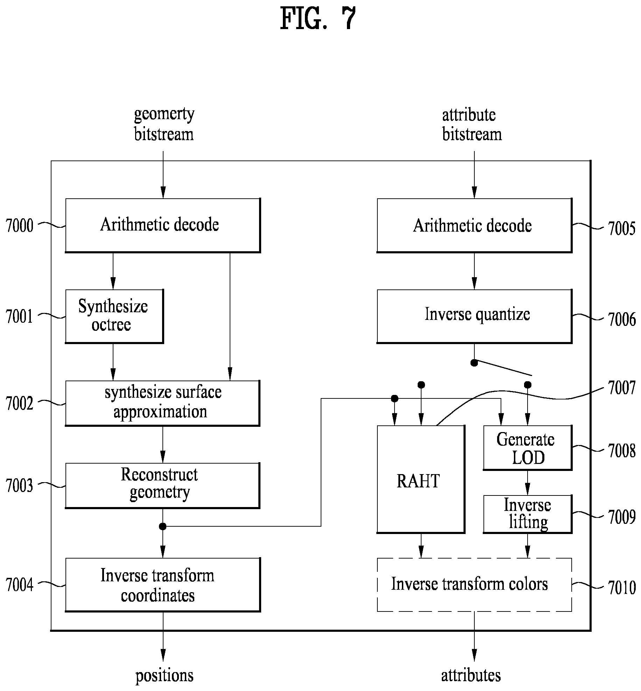

FIG. 7 illustrates a point cloud decoder according to embodiments.

The point cloud decoder illustrated in FIG. 7 is an example of the point cloud decoder and may perform a decoding operation, which is a reverse process to the encoding operation of the point cloud encoder illustrated in FIGS. 1 to 6.

As described with reference to FIGS. 1 and 6, the point cloud decoder may perform geometry decoding and attribute decoding. The geometry decoding is performed before the attribute decoding.

The point cloud decoder according to the embodiments includes an arithmetic decoder (Arithmetic decode) 7000, an octree synthesizer (Synthesize octree) 7001, a surface approximation synthesizer (Synthesize surface approximation) 7002, and a geometry reconstructor (Reconstruct geometry) 7003, a coordinate inverse transformer (Inverse transform coordinates) 7004, an arithmetic decoder (Arithmetic decode) 7005, an inverse quantizer (Inverse quantize) 7006, a RAHT transformer 7007, an LOD generator (Generate LOD) 7008, an inverse lifter (inverse lifting) 7009, and/or a color inverse transformer (Inverse transform colors) 7010.

The arithmetic decoder 7000, the octree synthesizer 7001, the surface approximation synthesizer 7002, and the geometry reconstructor 7003, and the coordinate inverse transformer 7004 may perform geometry decoding. The geometry decoding according to the embodiments may include direct decoding and trisoup geometry decoding. The direct coding and trisoup geometry decoding are selectively applied. The geometry decoding is not limited to the above-described example, and is performed as a reverse process to the geometry encoding described with reference to FIGS. 1 to 6.

The arithmetic decoder 7000 according to the embodiments decodes the received geometry bitstream based on the arithmetic coding. The operation of the arithmetic decoder 7000 corresponds to the reverse process to the arithmetic encoder 30004.

The octree synthesizer 7001 according to the embodiments may generate an octree by acquiring an occupancy code from the decoded geometry bitstream (or information on the geometry secured as a result of decoding). The occupancy code is configured as described in detail with reference to FIGS. 1 to 6.

When the trisoup geometry encoding is applied, the surface approximation synthesizer 7002 according to the embodiments may synthesize a surface based on the decoded geometry and/or the generated octree.

The geometry reconstructor 7003 according to the embodiments may regenerate geometry based on the surface and/or the decoded geometry. As described with reference to FIGS. 1 to 9, direct coding and trisoup geometry encoding are selectively applied. Accordingly, the geometry reconstructor 7003 directly imports and adds position information about the points to which direct coding is applied. When the trisoup geometry encoding is applied, the geometry reconstructor 7003 may reconstruct the geometry by performing the reconstruction operations of the geometry reconstructor 30005, for example, triangle reconstruction, up-sampling, and voxelization. Details are the same as those described with reference to FIG. 6, and thus description thereof is omitted. The reconstructed geometry may include a point cloud picture or frame that does not contain attributes.

The coordinate inverse transformer 7004 according to the embodiments may acquire positions of the points by transforming the coordinates based on the reconstructed geometry.

The arithmetic decoder 7005, the inverse quantizer 7006, the RAHT transformer 7007, the LOD generator 7008, the inverse lifter 7009, and/or the color inverse transformer 7010 may perform the attribute decoding. The attribute decoding according to the embodiments includes region adaptive hierarchical transform (RAHT) decoding, interpolation-based hierarchical nearest-neighbor prediction (prediction transform) decoding, and interpolation-based hierarchical nearest-neighbor prediction with an update/lifting step (lifting transform) decoding. The three decoding schemes described above may be used selectively, or a combination of one or more decoding schemes may be used. The attribute decoding according to the embodiments is not limited to the above-described example.

The arithmetic decoder 7005 according to the embodiments decodes the attribute bitstream by arithmetic coding.

The inverse quantizer 7006 according to the embodiments inversely quantizes the information about the decoded attribute bitstream or attributes secured as a result of the decoding, and outputs the inversely quantized attributes (or attribute values). The inverse quantization may be selectively applied based on the attribute encoding of the point cloud encoder.

According to embodiments, the RAHT transformer 7007, the LOD generator 7008, and/or the inverse lifter 7009 may process the reconstructed geometry and the inversely quantized attributes. As described above, the RAHT transformer 7007, the LOD generator 7008, and/or the inverse lifter 7009 may selectively perform a decoding operation corresponding to the encoding of the point cloud encoder.

The color inverse transformer 7010 according to the embodiments performs inverse transform coding to inversely transform a color value (or texture) included in the decoded attributes. The operation of the color inverse transformer 7010 may be selectively performed based on the operation of the color transformer 30006 of the point cloud encoder.

Although not shown in the figure, the elements of the point cloud decoder of FIG. 7 may be implemented by hardware including one or more processors or integrated circuits configured to communicate with one or more memories included in the point cloud providing device, software, firmware, or a combination thereof. The one or more processors may perform at least one or more of the operations and/or functions of the elements of the point cloud decoder of FIG. 7 described above. Additionally, the one or more processors may operate or execute a set of software programs and/or instructions for performing the operations and/or functions of the elements of the point cloud decoder of FIG. 7.

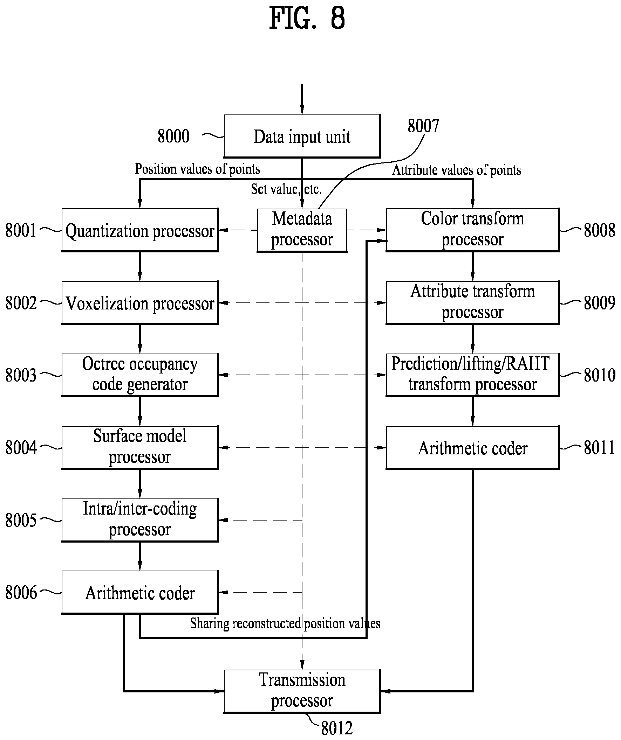

FIG. 8 illustrates a transmission device according to embodiments.

The transmission device shown in FIG. 8 is an example of the transmission device 10000 of FIG. 1 (or the point cloud encoder of FIG. 3). The transmission device illustrated in FIG. 8 may perform one or more of the operations and methods the same as or similar to those of the point cloud encoder described with reference to FIGS. 1 to 6. The transmission device according to the embodiments may include a data input unit 8000, a quantization processor 8001, a voxelization processor 8002, an octree occupancy code generator 8003, a surface model processor 8004, an intra/inter-coding processor 8005, an arithmetic coder 8006, a metadata processor 8007, a color transform processor 8008, an attribute transform processor 8009, a prediction/lifting/RAHT transform processor 8010, an arithmetic coder 8011 and/or a transmission processor 8012.

The data input unit 8000 according to the embodiments receives or acquires point cloud data. The data input unit 8000 may perform an operation and/or acquisition method the same as or similar to the operation and/or acquisition method of the point cloud video acquisition unit 10001 (or the acquisition process 20000 described with reference to FIG. 2).

The data input unit 8000, the quantization processor 8001, the voxelization processor 8002, the octree occupancy code generator 8003, the surface model processor 8004, the intra/inter-coding processor 8005, and the arithmetic coder 8006 perform geometry encoding. The geometry encoding according to the embodiments is the same as or similar to the geometry encoding described with reference to FIGS. 1 to 9, and thus a detailed description thereof is omitted.

The quantization processor 8001 according to the embodiments quantizes geometry (e.g., position values of points). The operation and/or quantization of the quantization processor 8001 is the same as or similar to the operation and/or quantization of the quantizer 30001 described with reference to FIG. 3. Details are the same as those described with reference to FIGS. 1 to 9.

The voxelization processor 8002 according to the embodiments voxelizes the quantized position values of the points. The voxelization processor 8002 may perform an operation and/or process the same or similar to the operation and/or the voxelization process of the quantizer 30001 described with reference to FIG. 3. Details are the same as those described with reference to FIGS. 1 to 6.

The octree occupancy code generator 8003 according to the embodiments performs octree coding on the voxelized positions of the points based on an octree structure. The octree occupancy code generator 8003 may generate an occupancy code. The octree occupancy code generator 8003 may perform an operation and/or method the same as or similar to the operation and/or method of the point cloud encoder (or the octree analyzer 30002) described with reference to FIGS. 3 and 4. Details are the same as those described with reference to FIGS. 1 to 6.

The surface model processor 8004 according to the embodiments may perform trisoup geometry encoding based on a surface model to reconstruct the positions of points in a specific region (or node) on a voxel basis. The surface model processor 8004 may perform an operation and/or method the same as or similar to the operation and/or method of the point cloud encoder (e.g., the surface approximation analyzer 30003) described with reference to FIG. 3. Details are the same as those described with reference to FIGS. 1 to 6.

The intra/inter-coding processor 8005 according to the embodiments may perform intra/inter-coding on point cloud data. The intra/inter-coding processor 8005 may perform coding the same as or similar to the intra/inter-coding. According to embodiments, the intra/inter-coding processor 8005 may be included in the arithmetic coder 8006.

The arithmetic coder 8006 according to the embodiments performs entropy encoding on an octree of the point cloud data and/or an approximated octree. For example, the encoding scheme includes arithmetic encoding. The arithmetic coder 8006 performs an operation and/or method the same as or similar to the operation and/or method of the arithmetic encoder 30004.

The metadata processor 8007 according to the embodiments processes metadata about the point cloud data, for example, a set value, and provides the same to a necessary processing process such as geometry encoding and/or attribute encoding. Also, the metadata processor 8007 according to the embodiments may generate and/or process signaling information related to the geometry encoding and/or the attribute encoding. The signaling information according to the embodiments may be encoded separately from the geometry encoding and/or the attribute encoding. The signaling information according to the embodiments may be interleaved.

The color transform processor 8008, the attribute transform processor 8009, the prediction/lifting/RAHT transform processor 8010, and the arithmetic coder 8011 perform the attribute encoding. The attribute encoding according to the embodiments is the same as or similar to the attribute encoding described with reference to FIGS. 1 to 6, and thus a detailed description thereof is omitted.

The color transform processor 8008 according to the embodiments performs color transform coding to transform color values included in attributes. The color transform processor 8008 may perform color transform coding based on the reconstructed geometry. The reconstructed geometry is the same as described with reference to FIGS. 1 to 9. Also, it performs an operation and/or method the same as or similar to the operation and/or method of the color transformer 30006 described with reference to FIG. 3 is performed. A detailed description thereof is omitted.

The attribute transform processor 8009 according to the embodiments performs attribute transformation to transform the attributes based on the reconstructed geometry and/or the positions on which geometry encoding is not performed. The attribute transform processor 8009 performs an operation and/or method the same as or similar to the operation and/or method of the attribute transformer 30007 described with reference to FIG. 3. A detailed description thereof is omitted. The prediction/lifting/RAHT transform processor 8010 according to the embodiments may code the transformed attributes by any one or a combination of RAHT coding, prediction transform coding, and lifting transform coding. The prediction/lifting/RAHT transform processor 8010 performs at least one of the operations the same as or similar to the operations of the RAHT transformer 30008, the LOD generator 30009, and the lifting transformer 30010 described with reference to FIG. 3. In addition, the prediction transform coding, the lifting transform coding, and the RAHT transform coding are the same as those described with reference to FIGS. 1 to 9, and thus a detailed description thereof is omitted.

The arithmetic coder 8011 according to the embodiments may encode the coded attributes based on the arithmetic coding. The arithmetic coder 8011 performs an operation and/or method the same as or similar to the operation and/or method of the arithmetic encoder 300012.

The transmission processor 8012 according to the embodiments may transmit each bitstream containing encoded geometry and/or encoded attributes or metadata information, or transmit one bitstream containing the encoded geometry and/or the encoded attributes and the metadata information. When the encoded geometry and/or the encoded attributes and the metadata information according to the embodiments are configured into one bitstream, the bitstream may include one or more sub-bitstreams. The bitstream according to the embodiments may contain signaling information including a sequence parameter set (SPS) for signaling of a sequence level, a geometry parameter set (GPS) for signaling of geometry information coding, an attribute parameter set (APS) for signaling of attribute information coding, and a tile parameter set (TPS) for signaling of a tile level, and slice data. The slice data may include information about one or more slices. One slice according to embodiments may include one geometry bitstream Geom00 and one or more attribute bitstreams Attr00 and Attr10.

A slice refers to a series of syntax elements representing the entirety or part of a coded point cloud frame.

The TPS according to the embodiments may include information about each tile (e.g., coordinate information and height/size information about a bounding box) for one or more tiles. The geometry bitstream may contain a header and a payload. The header of the geometry bitstream according to the embodiments may contain a parameter set identifier (geom_parameter_set_id), a tile identifier (geom _tile_id) and a slice identifier (geom_slice_id) included in the GPS, and information about the data contained in the payload. As described above, the metadata processor 8007 according to the embodiments may generate and/or process the signaling information and transmit the same to the transmission processor 8012. According to embodiments, the elements to perform geometry encoding and the elements to perform attribute encoding may share data/information with each other as indicated by dotted lines. The transmission processor 8012 according to the embodiments may perform an operation and/or transmission method the same as or similar to the operation and/or transmission method of the transmitter 10003. Details are the same as those described with reference to FIGS. 1 and 2, and thus a description thereof is omitted.

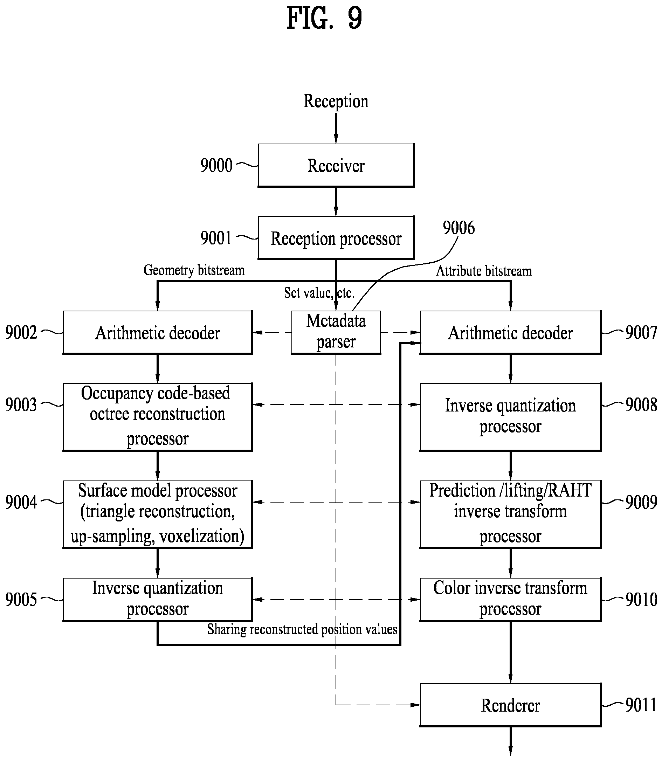

FIG. 9 illustrates a reception device according to embodiments.

The reception device illustrated in FIG. 9 is an example of the reception device 10004 of FIG. 1. The reception device illustrated in FIG. 9 may perform one or more of the operations and methods the same as or similar to those of the point cloud decoder described with reference to FIGS. 1 to 8.

The reception device according to the embodiment may include a receiver 9000, a reception processor 9001, an arithmetic decoder 9002, an occupancy code-based octree reconstruction processor 9003, a surface model processor (triangle reconstruction, up-sampling, voxelization) 9004, an inverse quantization processor 9005, a metadata parser 9006, an arithmetic decoder 9007, an inverse quantization processor 9008, a prediction/lifting/RAHT inverse transform processor 9009, a color inverse transform processor 9010, and/or a renderer 9011. Each element for decoding according to the embodiments may perform a reverse process to the operation of a corresponding element for encoding according to the embodiments.

The receiver 9000 according to the embodiments receives point cloud data. The receiver 9000 may perform an operation and/or reception method the same as or similar to the operation and/or reception method of the receiver 10005 of FIG. 1. The detailed description thereof is omitted.

The reception processor 9001 according to the embodiments may acquire a geometry bitstream and/or an attribute bitstream from the received data. The reception processor 9001 may be included in the receiver 9000.

The arithmetic decoder 9002, the occupancy code-based octree reconstruction processor 9003, the surface model processor 9004, and the inverse quantization processor 905 may perform geometry decoding. The geometry decoding according to embodiments is the same as or similar to the geometry decoding described with reference to FIGS. 1 to 8, and thus a detailed description thereof is omitted.

The arithmetic decoder 9002 according to the embodiments may decode the geometry bitstream based on arithmetic coding. The arithmetic decoder 9002 performs an operation and/or coding the same as or similar to the operation and/or coding of the arithmetic decoder 7000.

The occupancy code-based octree reconstruction processor 9003 according to the embodiments may reconstruct an octree by acquiring an occupancy code from the decoded geometry bitstream (or information about the geometry secured as a result of decoding). The occupancy code-based octree reconstruction processor 9003 performs an operation and/or method the same as or similar to the operation and/or octree generation method of the octree synthesizer 7001. When the trisoup geometry encoding is applied, the surface model processor 9004 according to the embodiments may perform trisoup geometry decoding and related geometry reconstruction (e.g., triangle reconstruction, up-sampling, voxelization) based on the surface model method. The surface model processor 9004 performs an operation the same as or similar to that of the surface approximation synthesizer 7002 and/or the geometry reconstructor 7003.

The inverse quantization processor 9005 according to the embodiments may inversely quantize the decoded geometry.

The metadata parser 9006 according to the embodiments may parse metadata contained in the received point cloud data, for example, a set value. The metadata parser 9006 may pass the metadata to geometry decoding and/or attribute decoding. The metadata is the same as that described with reference to FIG. 8, and thus detailed description thereof is omitted.

The arithmetic decoder 9007, the inverse quantization processor 9008, the prediction/lifting/RAHT inverse transform processor 9009 and the color inverse transform processor 9010 perform attribute decoding. The attribute decoding is the same as or similar to the attribute decoding described with reference to at least one of FIGS. 1 to 8, and thus a detailed description thereof is omitted.

The arithmetic decoder 9007 according to the embodiments may decode the attribute bitstream by arithmetic coding. The arithmetic decoder 9007 may decode the attribute bitstream based on the reconstructed geometry. The arithmetic decoder 9007 performs an operation and/or coding the same as or similar to the operation and/or coding of the arithmetic decoder 7005.

The inverse quantization processor 9008 according to the embodiments may inversely quantize the decoded attribute bitstream. The inverse quantization processor 9008 performs an operation and/or method the same as or similar to the operation and/or inverse quantization method of the inverse quantizer 7006.

The prediction/lifting/RAHT inverse transform processor 9009 according to the embodiments may process the reconstructed geometry and the inversely quantized attributes. The prediction/lifting/RAHT inverse transform processor 9009 performs one or more of operations and/or decoding the same as or similar to the operations and/or decoding of the RAHT transformer 7007, the LOD generator 7008, and/or the inverse lifter 7009 of FIG. 7. The color inverse transform processor 9010 according to the embodiments performs inverse transform coding to inversely transform color values (or textures) included in the decoded attributes. The color inverse transform processor 9010 performs an operation and/or inverse transform coding the same as or similar to the operation and/or inverse transform coding of the color inverse transformer 7010 of FIG. 7. The renderer 9011 according to the embodiments may render the point cloud data.

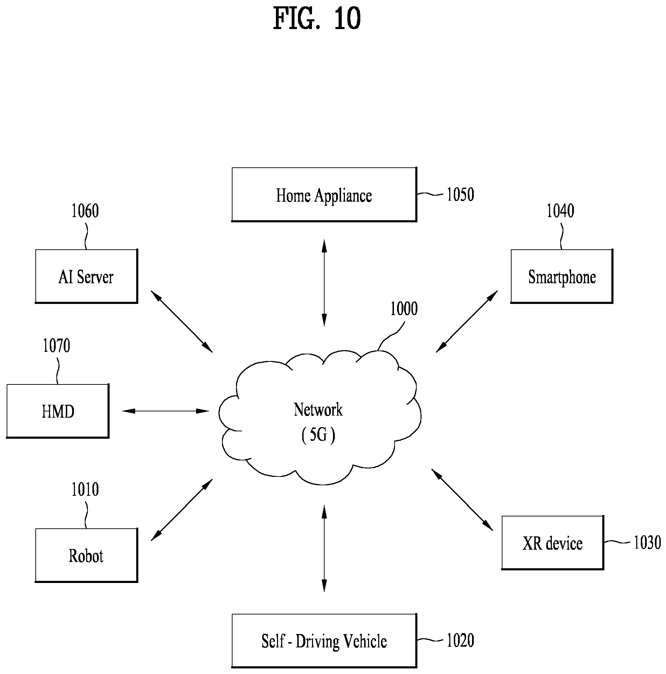

FIG. 10 illustrates an exemplary structure operable in connection with point cloud data transmission/reception methods/devices according to embodiments.

The structure of FIG. 10 represents a configuration in which at least one of a server 1060, a robot 1010, a self-driving vehicle 1020, an XR device 1030, a smartphone 1040, a home appliance 1050, and/or a head-mount display (HMD) 1070 is connected to the cloud network 1000. The robot 1010, the self-driving vehicle 1020, the XR device 1030, the smartphone 1040, or the home appliance 1050 is called a device. Further, the XR device 1030 may correspond to a point cloud data (PCC) device according to embodiments or may be operatively connected to the PCC device.

The cloud network 1000 may represent a network that constitutes part of the cloud computing infrastructure or is present in the cloud computing infrastructure. Here, the cloud network 1000 may be configured using a 3G network, 4G or Long Term Evolution (LTE) network, or a 5G network.

The server 1060 may be connected to at least one of the robot 1010, the self-driving vehicle 1020, the XR device 1030, the smartphone 1040, the home appliance 1050, and/or the HMD 1070 over the cloud network 1000 and may assist in at least a part of the processing of the connected devices 1010 to 1070.

The HMD 1070 represents one of the implementation types of the XR device and/or the PCC device according to the embodiments. The HMD type device according to the embodiments includes a communication unit, a control unit, a memory, an I/O unit, a sensor unit, and a power supply unit.

Hereinafter, various embodiments of the devices 1010 to 1050 to which the above-described technology is applied will be described. The devices 1010 to 1050 illustrated in FIG. 10 may be operatively connected/coupled to a point cloud data transmission device and reception device according to the above-described embodiments.

<PCC+XR>

The XR/PCC device 1030 may employ PCC technology and/or XR (AR+VR) technology, and may be implemented as an HMD, a head-up display (HUD) provided in a vehicle, a television, a mobile phone, a smartphone, a computer, a wearable device, a home appliance, a digital signage, a vehicle, a stationary robot, or a mobile robot.

The XR/PCC device 1030 may analyze 3D point cloud data or image data acquired through various sensors or from an external device and generate position data and attribute data about 3D points. Thereby, the XR/PCC device 1030 may acquire information about the surrounding space or a real object, and render and output an XR object. For example, the XR/PCC device 1030 may match an XR object including auxiliary information about a recognized object with the recognized object and output the matched XR object.

<PCC+XR+Mobile phone>

The XR/PCC device 1030 may be implemented as a mobile phone 1040 by applying PCC technology.

The mobile phone 1040 may decode and display point cloud content based on the PCC technology.

<PCC+Self-driving+XR>

The self-driving vehicle 1020 may be implemented as a mobile robot, a vehicle, an unmanned aerial vehicle, or the like by applying the PCC technology and the XR technology.

The self-driving vehicle 1020 to which the XR/PCC technology is applied may represent a self-driving vehicle provided with means for providing an XR image, or a self-driving vehicle that is a target of control/interaction in the XR image. In particular, the self-driving vehicle 1020 which is a target of control/interaction in the XR image may be distinguished from the XR device 1030 and may be operatively connected thereto.

The self-driving vehicle 1020 having means for providing an XR/PCC image may acquire sensor information from sensors including a camera, and output the generated XR/PCC image based on the acquired sensor information. For example, the self-driving vehicle 1020 may have an HUD and output an XR/PCC image thereto, thereby providing an occupant with an XR/PCC object corresponding to a real object or an object present on the screen.

When the XR/PCC object is output to the HUD, at least a part of the XR/PCC object may be output to overlap the real object to which the occupant's eyes are directed. On the other hand, when the XR/PCC object is output on a display provided inside the self-driving vehicle, at least a part of the XR/PCC object may be output to overlap an object on the screen. For example, the self-driving vehicle 1220 may output XR/PCC objects corresponding to objects such as a road, another vehicle, a traffic light, a traffic sign, a two-wheeled vehicle, a pedestrian, and a building.

The virtual reality (VR) technology, the augmented reality (AR) technology, the mixed reality (MR) technology and/or the point cloud compression (PCC) technology according to the embodiments are applicable to various devices.

In other words, the VR technology is a display technology that provides only CG images of real-world objects, backgrounds, and the like. On the other hand, the AR technology refers to a technology that shows a virtually created CG image on the image of a real object. The MR technology is similar to the AR technology described above in that virtual objects to be shown are mixed and combined with the real world. However, the MR technology differs from the AR technology in that the AR technology makes a clear distinction between a real object and a virtual object created as a CG image and uses virtual objects as complementary objects for real objects, whereas the MR technology treats virtual objects as objects having equivalent characteristics as real objects. More specifically, an example of MR technology applications is a hologram service.

Recently, the VR, AR, and MR technologies are sometimes referred to as extended reality (XR) technology rather than being clearly distinguished from each other. Accordingly, embodiments of the present disclosure are applicable to any of the VR, AR, MR, and XR technologies. The encoding/decoding based on PCC, V-PCC, and G-PCC techniques is applicable to such technologies.

The PCC method/device according to the embodiments may be applied to a vehicle that provides a self-driving service.

A vehicle that provides the self-driving service is connected to a PCC device for wired/wireless communication.

When the point cloud data (PCC) transmission/reception device according to the embodiments is connected to a vehicle for wired/wireless communication, the device may receive/process content data related to an AR/VR/PCC service, which may be provided together with the self-driving service, and transmit the same to the vehicle. In the case where the PCC transmission/reception device is mounted on a vehicle, the PCC transmission/reception device may receive/process content data related to the AR/VR/PCC service according to a user input signal input through a user interface device and provide the same to the user. The vehicle or the user interface device according to the embodiments may receive a user input signal. The user input signal according to the embodiments may include a signal indicating the self-driving service.

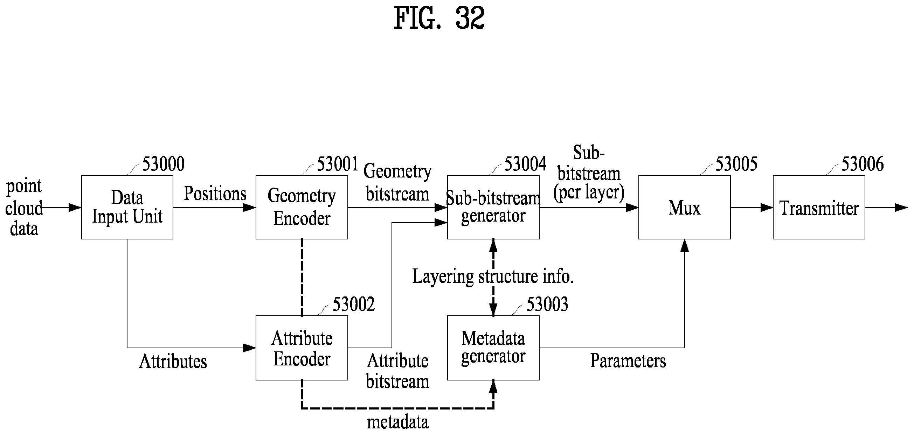

The point cloud data transmission method/device according to embodiments may refer to the transmitting device 10000, point cloud video encoder 10002, transmitter 10003 of FIG. 1, the acquisition 20000-encoding 20001-transmission 20002 of FIG. 2, the point cloud video encoder of FIG. 3, the transmission device of FIG. 8, the device of FIG. 10, and the transmission device of FIG. 32.

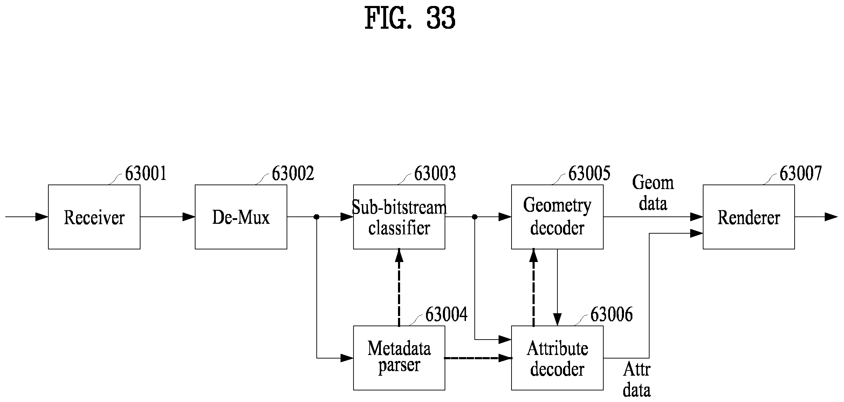

The point cloud data reception method/device according to embodiments may refer to the reception device 10004, receiver 10005, and point cloud video decoder 10006 of FIG. 1, the transmission 20002-decoding 20003-rendering 20004 of FIG. 2, the point cloud video decoder of FIG. 7, the reception device of FIG. 9, the device of FIG. 10, and the reception device of FIG. 33.

The point cloud data transmission/reception method/device according to the embodiments may be referred to simply as the method/device.

According to embodiments, geometry data, geometry information, and position information constituting point cloud data may be interpreted as having the same meaning. Also, attribute data and attribute information constituting the point cloud data may be interpreted as having the same meaning.

The method/device according to embodiments may process point cloud data in consideration of scalable transmission.

Embodiments disclose methods for efficiently supporting selective decoding of a portion of the point cloud data in cases where the selective decoding is needed due to receiver performance or transmission speed in transmitting/receiving the data by the method/device. Further, the present disclosure proposes techniques for improving the efficiency of scalable coding. In particular, for the pre-compressed data, the encoder on the transmitting side may selectively transmit only the information required by the decoder on the receiving side, and the decoder may decode the information. In this case, coding units may be configured as independent slices based on the meaning of tree levels, LoDs, or layer groups.

The present disclosure proposes a method for improving the efficiency of scalable coding among the point cloud data compression methods. Scalable coding is a technique capable of gradually changing the resolution of data based on according to the request/processing speed/performance/transmission bandwidth of the receiver. It enables the transmitter to deliver compressed data efficiently and the receiver to decode the compressed data appropriately.

In particular, when the transmission device codes attribute information, a scalable lifting method for scalable coding may be used. The present disclosure proposes a method for using the scalable lifting technique in a partial geometry coding environment.

More specifically, the present disclosure proposes a method of informing the reception device (or receiver) of sampling positions in consideration of a partial geometry coding environment when the transmission device generates LoDs for scalable attribute coding.

Referring to the point cloud data transmission/reception device (which may be referred to simply as an encoder/decoder) according to the embodiments shown in FIGS. 3 and 7, point cloud data is composed of a set of points. Each of the points includes geometry information (or geometry or geometry data) and attribute information (or an attribute or attribute data). The geometry information is 3D position information (xyz) about each point. That is, the position of each point is represented by parameters in a coordinate system representing a 3D space (e.g., parameters (x, y, z) of three axes, the X-axis, Y-axis, and Z-axis, representing the space). The attribute information represents the color (RGB, YUV, etc.), reflectance, normal vectors, transparency, and the like of the points. In point cloud compression (PCC), octree-based compression is performed to efficiently compress non-uniform distribution in a 3D space, and attribute information is compressed based on the octree-based compression. The point cloud video encoder and the point cloud video decoder shown in FIGS. 3 and 7 may process the operation(s) according to embodiments through respective components.

According to embodiments, the transmission device compresses the geometry information (e.g., position) and attribute information (e.g., color/brightness/reflectance, etc.) related to the point cloud data and transmits the compressed information to the reception device. The point cloud data may be configured according to an octree structure having layers or levels of detail (LoDs) according to the degrees of detail. Scalable point cloud data coding and representation may be performed based the configuration. In this case, only a part of the point cloud data may be decoded or represented according to the performance of the reception device or the transfer rate. However, there is currently no method to remove unnecessary data in advance.

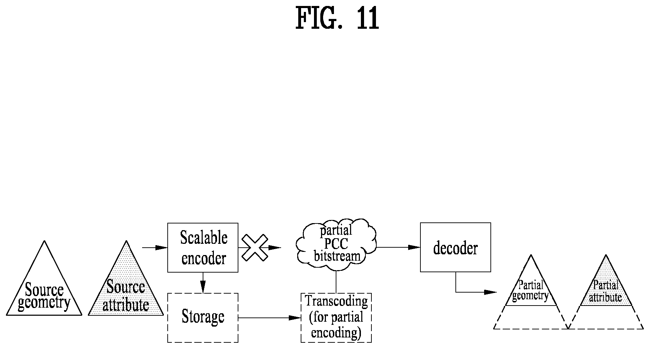

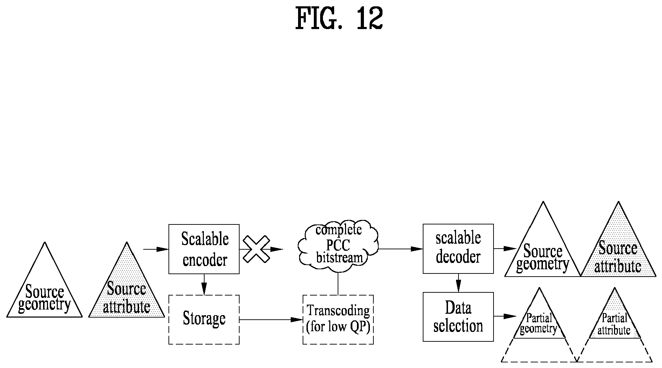

In other words, when only a part of a scalable point cloud compression bitstream needs to be transmitted (e.g., only a part of the layers are decoded in scalable decoding), the necessary part cannot be selected and sent. Accordingly, the transmission device should re-encode the necessary part after decoding as illustrated in FIG. 11, the reception device should selectively apply the necessary data after decoding the entire data delivered to the reception device, as illustrated in FIG. 12.

However, in the case of FIG. 11, a delay may occur due to the time required for decoding and re-encoding. In the case of FIG. 12, bandwidth efficiency may be degraded due to transmission of unnecessary data to the reception device. Further, when a fixed bandwidth is used, data quality may need to be lowered to transmit data.

In other words, in a PCC-based service, the compression rate or number of data may be adjusted for transmission depending on the receiver performance or transmission environment. If the point cloud data is bundled on a slice-by-slice basis as shown in FIG. 11, the receiver performance or transmission environment may change. In this case, it is necessary to 1) pre-transcode the bitstreams into a form suitable for each environment, store the same separately, and select a bitstream at the time of transmission, or to 2) perform transcoding prior to the transmission. In this case, if the number of receiver environments to be supported increases or the transmission environment frequently changes, issues related to the storage space or a delay resulting from transcoding may be raised.

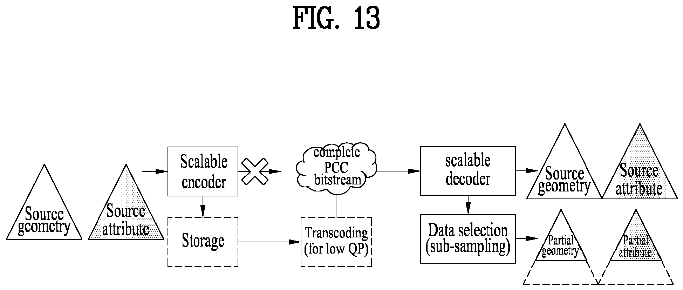

FIG. 13 is a diagram illustrating another example of compressing geometry and attributes of point cloud data for a service according to embodiments. That is, FIG. 13 is a diagram illustrating the operations at the transmitting side/-receiving sides when layered point cloud data is transmitted. In the case, if information that allows the entire point cloud data to be reconstructed is delivered regardless of the performance of the receiver, the receiver may need to reconstruct the point cloud data through decoding and then select only the point cloud data corresponding to the required layer (e.g., data selection or subsampling). In this case, since the delivered bitstream has already been decoded, a delay may occur in the receiver targeting low delay, or decoding may not be performed depending on the receiver performance.

However, when the bitstream is divided into slices and delivered, the receiver may selectively deliver the bitstream to the decoder according to the decoder performance or the density of the point cloud data to be represented according to the application field. In this case, by performing selection before the decoding, the decoder efficiency may be increased and decoders with various performances may be supported.

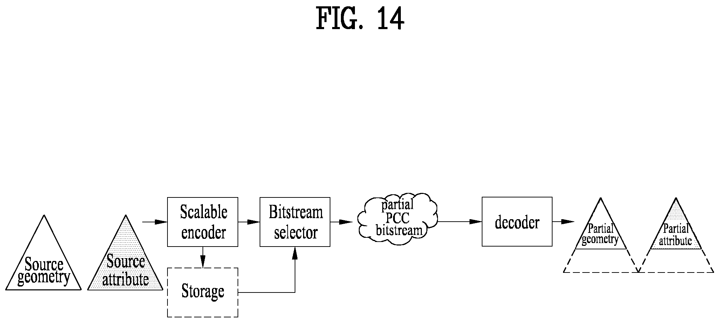

FIG. 14 is a diagram illustrating another example of compressing geometry and attributes of point cloud data for a service according to embodiments.

Dividing the compressed data according to layers for transmission as illustrated in FIG. 14 may enable only the necessary parts of the pre-compressed data to be selectively delivered through a bitstream selector at the bitstream stage without a separate transcoding operation. This is efficient in terms of storage space because only one storage space is needed per stream. It is also efficient in terms of bandwidth because the bitstream selector selects only necessary layers before transmission.

Accordingly, the present disclosure proposes a compression and transmission method enabling scalable transmission to address the issues mentioned in FIGS. 11 to 13. First, the present disclosure allows the use of tools supporting scalability in compressing positions (i.e., geometry) and attributes. Moreover, in transmitting the compressed data to the receiver, the transmitter may subdivide slices to allow the receiver to perform partial decoding, and may signal and transmit criteria for determination for selection of each slice to the receiver. In other words, the transmitter may transmit information that allows the receiver to select the required slices.

In the present disclosure, scalable transmission may refer to may refer to supporting cases where only a portion of a bitstream is delivered or decoded, rather than decoding the entire bitstream. The result of scalable transmission may be low-resolution point cloud data.

According to embodiments, when scalable transmission is applied to an octree-based geometry bitstream, point cloud data should be constructible using only the information up to a specific octree layer (or octree depth), from the root node to the leaf node, for bitstreams from each octree layer (or octree depth) . This requires that the targeted octree layer (or octree depth) has no dependency on information about lower octree layers (or octree depths). This may be a common constraint for geometry/attribute coding.

According to embodiments, when scalable lifting is used in attribute coding, partial decoding of attribute information may also be enabled based on the octree depth, similar to octree-based geometry coding. In this case, each octree depth may belong to an LoD, and one or more octree depths may be matched to a single LoD.

Methods/devices according to embodiments allow for selective delivery and decoding of layered point cloud data at the bitstream level.

The unit according to the embodiments may be referred to as an LOD, a layer, a slice, or the like. The LOD is the same term as LOD in attribute data coding, but may mean a data unit for a layered structure of a bitstream in another sense. The LOD may be a concept corresponding to one depth or a set of two or more depths based on the layer structure of point cloud data, for example, depths (levels) of an octree or multiple trees. Similarly, a layer is provided to generate a unit of a sub-bitstream. It is a concept that corresponds to one depth or a set of two or more depths, and may correspond to one LOD or two or more LODs. Also, a slice is a unit for configuring a unit of a sub-bitstream, and may correspond to one depth, a part of one depth, or two or more depths. Also, a slice may correspond to one LOD, a part of one LOD, or two or more LODs. According to embodiments, the LOD, the layer, and the slice may correspond to each other or one of the LOD, the layer, and the slice may be included in another one. The units according to embodiments may include and be referred to complementarily as LoD, layer, slice, layer group, sub-group, etc. According to embodiments, in an octree structure, layer, depth, level, depth level, and octree depth may be used interchangeably.

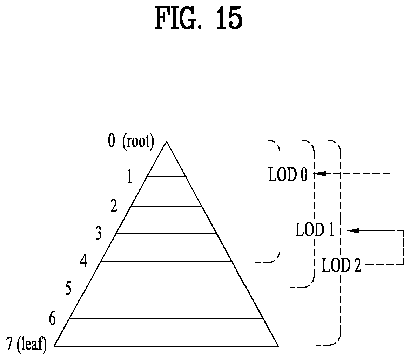

FIG. 15 is a diagram illustrating an example of layer-based point cloud data configuration according to embodiments. FIG. 15 illustrates an example of an octree structure with the root node defined at depth level 0 and the leaf node defined at depth level 7.

The methods/devices according to the embodiments may configure layer-based point cloud data as shown in FIG. 15 to encode the point cloud data through the transmission device and decode the point cloud data through the reception device.

Layering of point cloud data according to embodiments may have a layer structure in terms of SNR, spatial resolution, color, temporal frequency, bit depth, or the like depending on the application field, and may configure layers in a direction in which data density increases based on the octree structure or LOD structure.

That is, when the LOD is generated based on the octree structure, the LOD may be defined to increase in a direction in which the detail increases, that is, in a direction in which the octree depth level increases. In the present disclosure, a layer may have the same meaning as a level, a depth, and a depth level.

Referring to FIG. 15 as an example, in an octree structure having seven depth levels excluding the root node level (also referred to as the root level), LoD 0 includes octree depth levels from the root node level to octree depth level 4, LoD 1 includes octree depth levels from the root node level to octree depth level 5, and LoD 2 includes octree depth levels from the root node level to octree depth level 7.

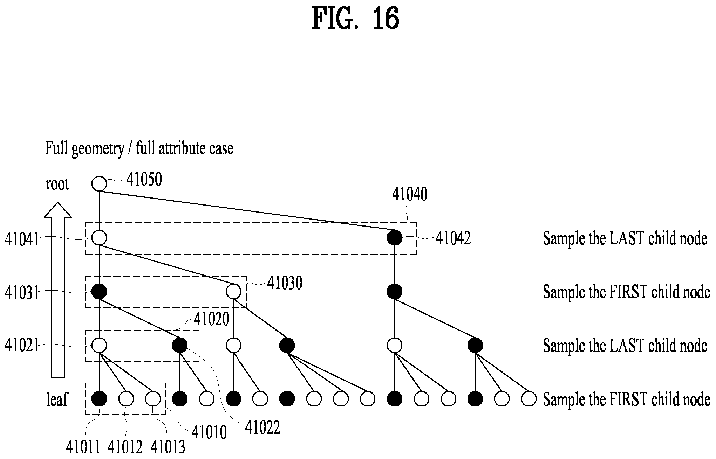

FIG. 16 is a diagram illustrating an example method of generating LoDs in an octree structure for full geometry/full attribute encoding/decoding according to embodiments.

Specifically, FIG. 16 illustrates an example method of generating LoDs when scalable lifting is used by an attribute encoder of a transmission device. In particular, FIG. 16 illustrates a method of selecting (or sampling) an attribute of a child node among the child nodes as the attribute of the parent node based on a geometry octree structure. In the present disclosure, a child node selected from among the child nodes may be referred to as a retained node.

As shown in FIG. 16, when the octree depth is 4, the attribute of one of the child nodes belonging to octree depth 4 may be selected as the attribute of a node belonging to octree depth 3. Similarly, the attribute of one of the child nodes belonging to octree depth 3 may be selected as the attribute of a node belonging to octree depth 2. In this way, scalable lifting may recursively apply the method of selecting representative attributes based on the attributes of the child nodes in a direction from the leaf node toward the root node, thereby enabling attributes to be assigned to nodes at every octree level. In the present disclosure, the method of selecting (or sampling) one of the child nodes at each octree depth to assign the attribute of the parent node may be referred to as octree-based sampling. A child node selected from among the child nodes may be referred to as a retained node.

In the example of FIG. 16, the position of the child node that is selected (or sampled) from among the child nodes may vary depending on the octree level. For example, when sampling is performed at the leaf node level (i.e., octree depth 4), the attribute of the first child node may be used as the attribute of the parent node (i.e., Sample the first child node), whereas, when sampling is performed at octree depth 3, the attribute of the last child node may be used as the attribute of the parent node (i.e., Sample the last child node). The shaded nodes (e.g., 41011, 41022, 41031, 40142) in FIG. 16 indicate the positions of the child nodes selected for the attribute of the parent node.

According to the rule disclosed above, for the attribute of parent node 41021 of block 41010 at the leaf node level (i.e., octree depth 4), the attribute of the first child node 41011 among the three child nodes 41011, 41012, and 41013 is selected (i.e., Sample the first child node). In this case, for $LoD_l$ including the leaf node level, $l$ may be an odd number. In addition, for the attribute of parent node 41031 of block 41020 at octree depth 3, the last child node 41022 between the two child nodes 41021 and 41022 is selected (i.e., Sample the last child node). In this case, for $LoD_l$ including octree depth 3, $l$ may be an even number. Also, for the attribute of parent node 41041 of block 41030 at octree depth 2, the first child node 41031 between the two child nodes 41031 and 41032 is selected (i.e., Sample the first child node). In this case, for $LoD_l$ including octree depth 2, $l$ may be an odd number. Further, for the attribute of parent node 41050 (i.e., the root node) of block 41040 at octree depth 1, the last child node 41042 between the two child nodes 41041 and 41042 is selected (i.e., Sample the last child node). In this case, for $LoD_l$ including octree depth 1, $l$ may be an even number.

Given that the geometry/attribute coding scheme supports layer-based scalability using the method illustrated in FIG. 16, scalability may be supported before decoding as in scalable transmission applications by configuring slices according to the layer structure.

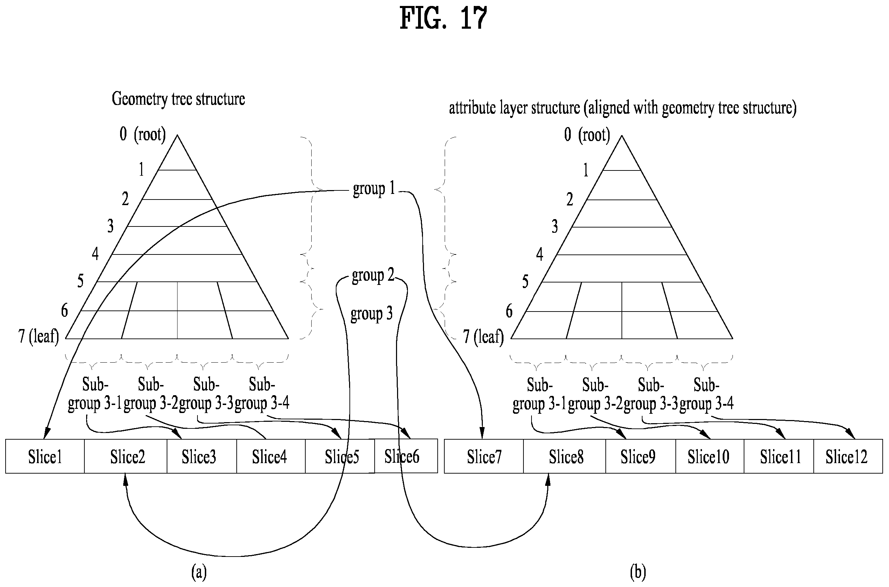

FIGS. 17-(a) and 17-(b) are diagrams illustrating an example method of configuring layer groups in an octree structure according to an embodiment of the present disclosure.

FIG. 17-(a) is a diagram illustrating an example in which a specific layer group is divided into multiple sub-groups in a geometry tree structure (e.g., an octree structure). FIG. 17-(b) is a diagram illustrating an example in which a specific layer group is divided into multiple sub-groups in an attribute tree structure (e.g., the same octree as in FIG. 17-(a)). Particularly, FIG. 17-(b) illustrates an example of an attribute tree structure aligned with the geometry tree structure of FIG. 17-(a).

According to embodiments, the methods/devices may generate one or more layer groups and/or sub-groups using the layer structure of the geometry tree as in FIG. 17-(a).

For example, referring to FIG. 17-(a), an octree with 8 layers is partitioned into 3 layer groups, and one of the layer groups is further partitioned into 4 sub-groups. For simplicity, the 3 layer groups are referred to as first to third layer groups (groups 1 to 3), and the 4 sub-groups partitioned from the third layer group (i.e., group 3) are referred to as first to fourth sub-groups (sub-groups 3-1 to 3-4). Additionally, the first layer group (i.e., layer group 1) may be referred to as the root layer group or the top layer group.

Six slices are used to deliver bitstreams (also referred to as sub-bitstreams) belonging to the first layer group, second layer group, and first to fourth sub-layer groups, respectively. That is, this example shows a single slice segmented into six slices.

In FIG. 17-(a), the first layer group (i.e., group 1) includes layers 0 to 4, the second layer group (i.e., group 2) includes layer 5, and the third layer group (i.e., group 3) includes layers 6 and 7.

The third layer group (i.e., group 3) is further partitioned into the first to fourth sub-groups (i.e., group 3-1 to group 3-4), wherein parent-child pairs are present in each sub-group.

In the layer group structure of the geometry coding tree shown in FIG. 17-(a), Slice 1 is used to transmit a geometry sub-bitstream belonging to the first layer group, Slice 2 is used to transmit a geometry sub-bitstream belonging to the second layer group, Slice 3 is used to transmit a geometry sub-bitstream belonging to the first sub-group, Slice 4 is used to transmit a geometry sub-bitstream belonging to the second sub-group, Slice 5 is used to transmit a geometry sub-bitstream belonging to the third sub-group, and Slice 6 is used to transmit a geometry sub-bitstream belonging to the fourth sub-group.

In one embodiment, if scalable attribute coding is used and the attribute tree structure is the same as the geometry tree structure, the same octree-slice mapping is used to generate attribute slice segments, as illustrated in FIG. 17-(b). That is, in the aligned layer group structure of the attribute coding tree shown in FIG. 17-(b), Slice 7 is used to transmit an attribute sub-bitstream belonging to the first layer group, Slice 8 is used to transmit an attribute sub-bitstream belonging to the second layer, Slice 9 is used to transmit an attribute sub-bitstream belonging to the first sub-group, Slice 10 is used to transmit an attribute sub-bitstream belonging to the second sub-group, Slice 11 is used to transmit an attribute sub-bitstream belonging to the third sub-group, and Slice 12 is used to transmit an attribute sub-bitstream belonging to the fourth sub-group.

A layer group according to the embodiments represents a set of layer structure units that occur in G-PCC coding, such as octree layers or LoD layers.

A sub-group according to the embodiments may be represented as a set of neighbor nodes based on position information for a layer group. Alternatively, a bundle may be configured based on the lowest layer in the layer group (which may be a layer closest to the root side, and may be layer 6 in the case of group 3 in FIG. 17). A sub-group may be configured as a bundle of nodes neighboring each other by Morton code order, as a bundle of distance-based neighbor nodes, or as a bundle of nodes neighboring each other according to coding order. Additionally, nodes in a parent-child relationship may be specified to be present in the same sub-group.

When a sub-group is defined, a boundary occurs in the middle of a layer, and signaling information (e.g., sps_entropy_continuation_enabled_flag, gsh_entropy_continuation_flag, etc.) is used to indicate whether continuity is maintained at the boundary. That is, the signaling information may be used to indicate whether entropy is used continuously, and ref_slice_id may be provided. Thereby, continuity with the previous slice may be continuously maintained.

As described above, segmented slices are efficient from the perspectives of error robustness, effective transmission, and supporting regions of interest.

In other words, compared to the single slice structure, segmented slices may be more robust to errors. That is, when a slice contains the entire bitstream of a frame, data loss may affect the entire frame data. In contrast, when the geometry tree is divided into multiple layer groups and the bitstream is segmented into multiple slices corresponding to the divided layer groups, even if at least one slice is lost, at least one slice that is not affected by the loss may be decoded.

As such, the device and method according to the embodiments may divide a tree structure with multiple layers into one or more layer groups and/or one or more sub-groups, and transmit the geometry and/or attribute data of the divided layer group and/or sub-group through each slice, thereby allowing the reception device to perform selective decoding or parallel decoding.

In addition, the method/device according to the embodiments may define a slice segmentation structure for point cloud data and signal a structure of layer groups, sub-groups, and slices for scalable transmission.

In the present disclosure, according to an embodiment, when this structure is used, a scalable structure allowing the transmitter/receiver to select a scalable layer may be transmitted to the receiver. In particular, in the present disclosure, considering the octree structure, all octree layers may support scalable transmission, or scalable transmission may be allowed for only a specific octree layer and lower layers.

Accordingly, when some of the octree layers are included, a scalable layer in which the slice is included may be indicated, such that the decoder of the receiver may determine whether the slice is necessary/unnecessary in the bitstream step (before decoding). For example, for the root node to a specific octree depth, one scalable layer may be configured without supporting scalable transmission, and the lower octree layers (also referred to as octree depths) may be matched to scalable layers in a one-to-one correspondence manner. In general, scalability may be supported for a part corresponding to the leaf node. As shown in FIGS. 17-(a) and 17-(b), when multiple octree layers are included in a slice, one scalable layer may be defined to be configured for the layers.

In this case, scalable transmission of the transmission device and scalable decoding of the reception device may be used distinctively depending on the purpose. For example, the scalable transmission may be used in order for the transmission/reception device to select information up to a specific layer without operation of the decoder, and scalable decoding may be used to select a specific layer during coding. That is, the scalable transmission may support selection of necessary information without involving the decoder in a compressed state (i.e., in the bitstream stage) to allow the transmitter or receiver to determine a specific layer. On the other hand, in the case of scalable decoding, encoding/decoding may be supported for information only up to a necessary part in the encoding/decoding process. Thus, scalable decoding may be used in an operation such as scalable representation.

In this case, the layer configuration for scalable transmission may be different from the layer configuration for scalable decoding. For example, the lower three octree layers including the leaf node may constitute one layer in terms of scalable transmission. On the other hand, in terms of scalable decoding, when all layer information is included, scalable decoding may be enabled for each of the leaf node layer, leaf node layer-1 and leaf node layer-2.

Slice-level Scalability vs. Octree-level Scalability

In the present disclosure, the layer group maybe used as a unit that represents a set of one or more octree layers. The layer group may also represent a set of octree layers to be configured in a slice-by-slice basis. That is, while spatial scalability by actual octree layers (or scalable attribute layers) may be provided for each octree layer. However, when scalability is configured at the slice level before bitstream parsing, it may be selectable at the layer group level. In other words, in the examples of FIGS. 17-(a) and 17-(b), when scalability is used at the slice level as in scalable transmission, the provided scalable steps are three steps of group 1, group 2, and group 3, and the scalable steps that may be provided in the decoding step by the octree structure are eight steps, from root to leaf.

For example, referring to FIGS. 17-(a) and 17-(b), when group1 to group3 are each configured as a slice, the reception device or transmission device may 1), all the better to lower select only group 1, 2) select group 1 and group 2, or 3) select group 1 to group 3.

When only group 1 is selected, the maximum octree level is 4, and one scalable layer among octree layers 0 to 4 may be selected in the decoding process. In this case, the receiver (or reception device) may consider the node size obtainable at the maximum octree depth as the leaf node, and may signal and transmit the node size to the reception device. In one embodiment, the information for identifying the node size may be included in the attribute parameter set or the attribute slice header and transmitted.

When groups 1 and 2 are selected, layer 5 is added, the maximum octree level is 5, and one scalable layer among octree layers 0 to 5 may be selected in the decoding process. In this case, the receiver (or reception device) may consider the node size obtainable at the maximum octree depth as the leaf node, and may signal and transmit the node size to the reception device. In one embodiment, the information for identifying the node size may be included in the attribute parameter set or the attribute slice header and transmitted.

When groups 1, 2, and 3 are selected, layers 6 and 7 are added, and thus the maximum octree level is 7. One scalable layer among octree layers 0 to 7 may be selected in the decoding process. In this case, the receiver (or reception device) may consider the node size obtainable at the maximum octree depth as the leaf node, and may signal and transmit the node size to the reception device. In one embodiment, the information for identifying the node size may be included in the attribute parameter set or the attribute slice header and transmitted.

In this case, the decoding layers for geometry and attributes may be selected symmetrically or asymmetrically.

Attribute Coding Considering Partial Geometry

When scalable transmission is used, the reception device may perform partial decoding on geometry and attributes, which may result in a difference between the encoding octree depth and the decoding octree depth. In this case, for scalable lifting, which performs LoD generation based on full octree depth, a mismatch may occur due to the difference between the encoding and decoding octree depths.

As described with reference to FIG. 16, when scalable lifting LoD generation is performed for octree depth 4, the first child node is selected from among the child nodes for the leaf node level, the last child node is selected from among the child nodes for leaf node level+1, and the first child node is selected from among the child nodes for leaf node level+2. In this manner, the first and last child nodes are alternately selected as the octree depth decreases. This is a method to select nodes close to the center of the upper node (i.e., the parent node) and may increase coding efficiency at full octree depth. However, in the case of partial geometry that is not at the full octree depth, the following issues may arise.

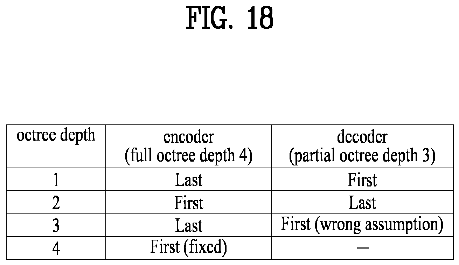

FIG. 18 illustrates an example of performing scalable lifting LoD generation according to embodiments. In particular, assuming that there are four octree depths, this figure illustrates a case where encoding is performed at the full octree depth (i.e., octree depth 4) by the encoder of the transmission device, and partial decoding is performed at octree depth 3 by the decoder of the reception device.

In other words, FIG. 18 illustrates a case where scalable lifting LoD generation is performed while encoding is performed by the encoder of the transmission device for octree depth 4, and partial decoding is performed up to octree depth 3 by the decoder of the reception device.

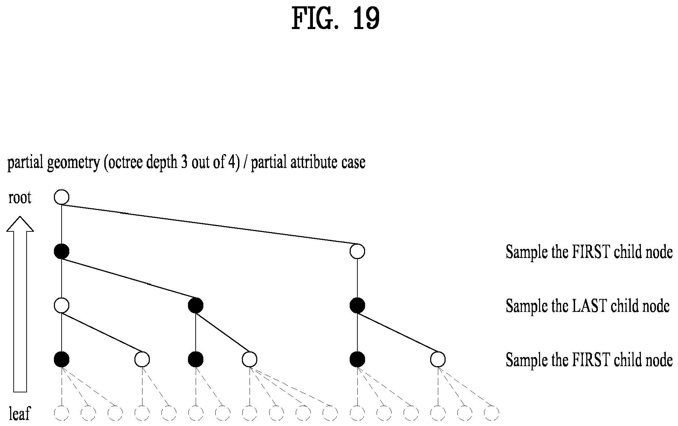

FIG. 19 is a diagram illustrating an example of performing partial decoding in an octree structure according to embodiments. That is, FIG. 19 illustrates the case of FIG. 18 in an octree structure.

Referring to FIGS. 18 and 19 as an example, the encoder and/or decoder generates scalable lifting LoDs by alternately selecting the first child node and the last child node according to the octree level from the leaf node level to the root node level, depending on the octree level. Since the decoded geometry octree depth is 3, the receiver (or reception device) selects the first child node from among the child nodes at octree level 3 and the last child node from among the child nodes at octree level 2 to generate scalable lifting LoDs. However, this results in the selection of different attributes than in the scalable lifting LoD generation performed based on octree depth 4 in the encoding operation, which leads to a partial point cloud that deviates from the intention of the encoder.

For example, referring to FIGS. 18 and 19, at octree depth 2,the encoder selects (or samples) the first child node from among the child nodes, while the decoder selects (or samples) the last child node from among the child nodes. Therefore, a mismatch may occur between the attribute assigned to the parent node (or upper node) by the encoder (i.e., the attribute of the first child node) and the attribute assigned to the parent node by the decoder (i.e., the attribute of the last child node).

That is, the LoD generation used in scalable lifting is applied alternating sampling positions according to the octree depth on the assumption of full octree depth geometry. Thus, the attribute of a position close to the node center may be used as the attribute of the upper node (i.e., the parent node), which may increase compression efficiency. When scalable transmission is supported, partial geometry is supported. In this case, a mismatch in sampling positions for scalable lifting LoD generation may occur between the encoder and decoder. This may lead to inaccurate representation of the partial point cloud at the reception device.

The present disclosure proposes methods of changing the sampling reference position or clearly signaling the sampling reference position through various embodiments to address geometry/attribute mismatches in partial decoding.

In particular, the present disclosure proposes a method of identifying the sampling direction (also referred to as LoD sampling direction or sampling position) of at least one octree depth in the octree structure in generating LoDs for sub-group-level partial decoding.

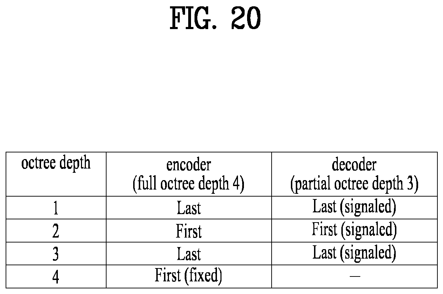

FIG. 20 illustrates another example in which scalable lifting LoD generation is performed according to embodiments.

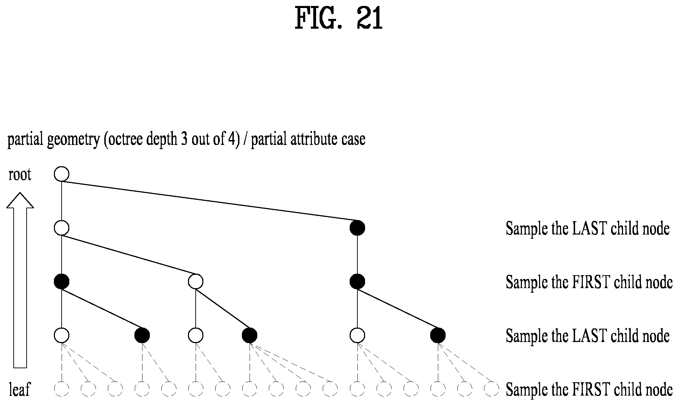

FIG. 21 illustrates another example in which partial decoding is performed in an octree structure according to embodiments. That is, FIG. 21 illustrates the case of FIG. 20 in an octree structure.

In other words, FIGS. 20 and 21 illustrate a first embodiment for addressing the mismatch issue in scalable lifting LoD generation caused by partial geometry.

In the present disclosure, the first embodiment is a method of signaling the sampling position and transmitting the same to the reception device.

In other words, according to the first embodiment, the sampling position for each level (also referred to as an octree depth) may be signaled. At this time, by also delivering the information about the full octree depth, the exact sampling position (i.e., the same sampling position) may be used even in the presence of partial geometry. With the method of the first embodiment, partial geometry and attributes may be supported through signaling without changing the existing encoder/decoder. The signaling of LoD generation-related information that indicates the sampling position for each level will be described in detail later.

According to embodiments, the sampling position for the leaf node level (or leaf node layer) may either be fixed or signaled through signaling information. FIG. 20 illustrates one embodiment in which the sampling position for the leaf node level is fixed.

FIG. 20 illustrates an example where the sampling position of the leaf node level (or leaf node layer) is fixed to the position of the first child node among the child nodes. For the other layers (i.e., the other octree depths) except the leaf node layer, the sampling positions are signaled.

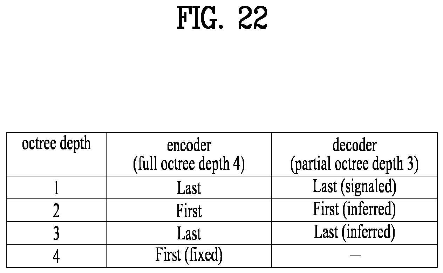

FIG. 22 illustrates another example in which scalable lifting LoD generation is performed according to embodiments.

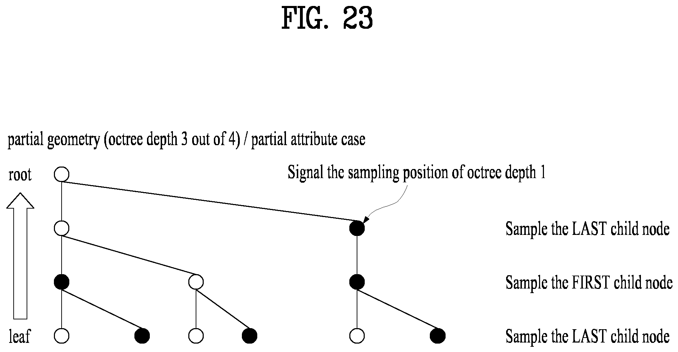

FIG. 23 illustrates another example in which partial decoding is performed in an octree structure according to embodiments. That is, FIG. 23 illustrates the case of FIG. 22 in an octree structure.

In other words, FIGS. 22 and 22 illustrate a second embodiment for addressing the mismatch issue in scalable lifting LoD generation caused by partial geometry.

In the present disclosure, the second embodiment is a method of signaling the sampling position for octree depth 1 and transmitting the same to the reception device.

According to embodiments, in partial geometry decoding, octree levels successive from the leaf node level are discarded. Accordingly, when the sampling position information for octree depth 1, which is always decoded, is delivered to the reception device, the sampling positions for subsequent octree depths (or layers or levels) may be applied (or inferred) alternately according to the octree depth.

For example, as shown in FIGS. 22 and 23, when the sampling position for octree depth 1 is the last child node among the child nodes, the sampling positions for the subsequent octree depths may be inferred as the first child node, then the last child node, and so on. That is, when the sampling position for octree depth 1 is signaled as the last child node, the sampling position for octree depth 2 may be inferred as the first child node, and the sampling position for octree depth 3 may be inferred as the last child node. According to embodiments, the encoder may either fix the sampling position for the leaf node level (or leaf node layer) may either be fixed or signal the same through signaling information. FIG. 22 illustrates one embodiment in which the sampling position for the leaf node level is fixed.

With the method of the second embodiment, partial geometry and attributes may be supported through signaling without changing the existing encoder/decoder.

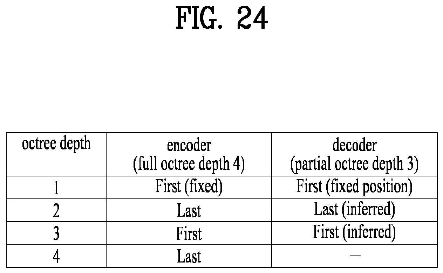

FIG. 24 illustrates another example in which scalable lifting LoD generation is performed according to embodiments.

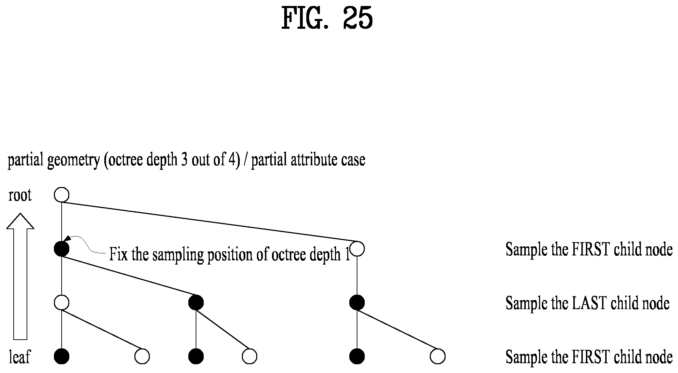

FIG. 25 illustrates another example in which partial decoding is performed in an octree structure according to embodiments. That is, FIG. 25 illustrates the case of FIG. 24 in the form of an octree structure.

In other words, FIGS. 24 and 25 illustrate a third embodiment for addressing the mismatch issue in scalable lifting LoD generation caused by partial geometry.

In the present disclosure, the third embodiment is a method of fixing the sampling position for octree depth 1. While FIGS. 20 and 22 illustrate a case where the sampling position for the leaf node level is fixed, FIG. 24 illustrates a case where the sampling position for octree depth 1 is fixed, which may provide the advantage that the sampling position does not change during scalable lifting LoD generation even if partial geometry decoding occurs.

In other words, in partial geometry decoding, octree levels successive from the leaf node level are discarded. Accordingly, when the sampling position for octree depth 1, which is always decoded, is fixed, the sampling positions for subsequent octree depths (or layers or levels) may be applied (or inferred) alternately according to the octree depth.

For example, as shown in FIGS. 24 and 25, when the sampling position for octree depth 1 is fixed to the first child node among the child nodes, the sampling positions for the subsequent octree depths may be inferred as the last child node, then the first child node, and so on. That is, when the sampling position for octree depth 1 is fixed to the first child node, the sampling position for octree depth 2 may be inferred as the last child node, and the sampling position for octree depth 3 may be inferred as the first child node. In addition, since the leaf node level (or leaf node layer) corresponds to octree depth 4, the sampling position for the leaf node level may be inferred as the last child node.

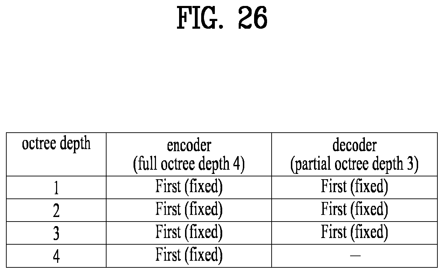

FIG. 26 illustrates another example in which scalable lifting LoD generation is performed according to embodiments.

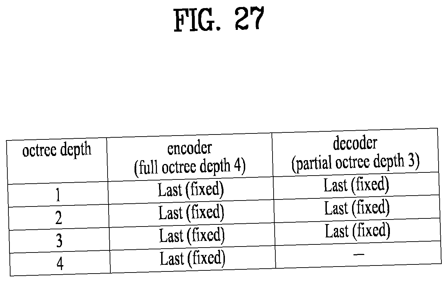

FIG. 27 illustrates another example in which scalable lifting LoD generation is performed according to embodiments.

In other words, FIGS. 26 and 27 illustrate a fourth embodiment for addressing the mismatch issue in scalable lifting LoD generation caused by partial geometry.

In the present disclosure, the fourth embodiment is a method of using a fixed sampling position for all octree depths. Alternatively, in the fourth embodiment, the use of points in a specific order for LoD generation may be signaled.

FIG. 26 illustrates a case where the sampling position is fixed to the first child node for all octree depths, while FIG. 27 illustrates a case where the sampling position is fixed to the last child node for all octree depths.

By fixing the sampling position for all octree depths in FIGS. 26 and 27, the sampling position may not change during scalable lifting LoD generation even if partial geometry decoding occurs.

According to a fifth embodiment of the present disclosure, when skip layer-groups or skip layers are used in applications such as layer-group slicing or scalable coding, the sampling position (or sampling direction) used by the encoder may be inferred using specific code (or syntax) as described below in order to maintain coding efficiency.

Based on the layer information or bounding box information or root node information related to the actual decoded/encoded sub-data as well as the overall layer information or bounding box information or root node information related to the input point cloud data for the encoder as described below, the missing layer information may be inferred. Based on the inferred information, the layers at the encoder may be estimated (as octreeNodeSizeLog2 + rootNodeSizeLog2 - rootNodeSizeLog2_coded), the sampling direction, which is the sampling position used, may also be inferred.

```
if (layer_group_enabled_flag) {

octreeNodeSizeLog2 = lodIndex;

direction = (octreeNodeSizeLog2 + rootNodeSizeLog2 - rootNodeSizeLog2_coded)
& 1;

subsampleByOctree(pointCloud, packedVoxel, input, octreeNodeSizeLog2, retained,
indexes, direction);

}
```

In the syntax above, lodIndex is the index indicating the current LoD. It may increase or decrease sequentially from higher to lower LoD.
octreeNodeSizeLog2 indicates the log2-scale value of the size of the node for the current LoD, and rootNodeSizeLog2 indicates the log2-scale value of the size of the node or bounding box that covers the entire point cloud data input to the encoder. rootNodeSizeLog2_coded indicates the log2 scale value of the size of the node or bounding box that covers the actually encoded point cloud data. Both rootNodeSizeLog2 and rootNodeSizeLog2_coded may be included in the LoD generation-related information and transmitted to the reception device. The LoD generation-related information may be included in the APS and/or SEI.

The scalable lifting LoD generation process described so far may be performed by the transmission/reception device of FIG. 1, the encoding/decoding of FIG. 2, the transmission device/method of FIG. 3, the reception device/method of FIG. 7, the transmission/reception device/method of FIGS. 8 and 9, the devices of FIG. 10, the transmission device of FIG. 32, and the reception device of FIG. 33.

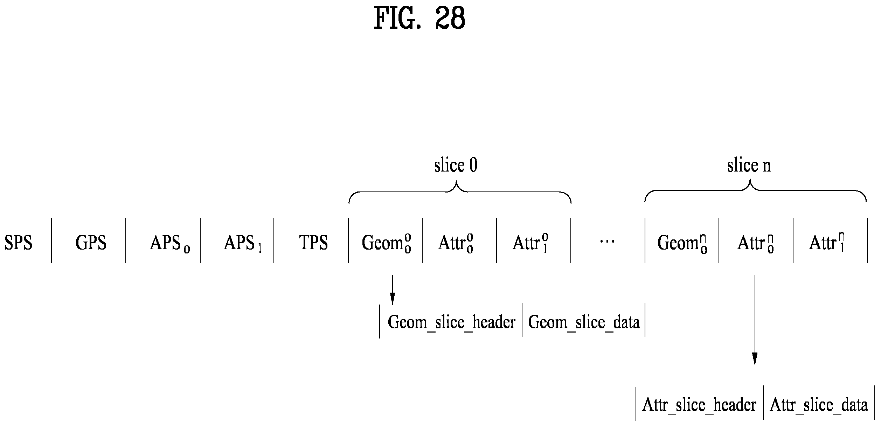

FIG. 28 illustrates an example bitstream structure of point cloud data for transmission/reception according to embodiments. According to the embodiments, the bitstream output from the point cloud video encoder of any one of FIGS. 1, 2, 3, 8, and 32 may conform to the structure shown in FIG. 28.

According to embodiments, the bitstream of point cloud data provides tiles or slices to allow point cloud data to be divided into regions to be processed. Each region of the bitstream according to embodiments may have different importance. Therefore, when point cloud data is divided into tiles, different filters (encoding methods) and different filter units may be applied to the tiles, respectively. When point cloud data is divided into slices, different filters and different filter units may be applied to the slices, respectively.

The transmission device according to the embodiments may transmit point cloud data according to the bitstream structure as shown in FIG. 28, and may thus provide a method of applying different encoding operations according to the importance and using an encoding method with good quality in an important region. In addition, efficient encoding and transmission according to the characteristics of point cloud data may be supported and attribute values according to user requirements may be provided.

the reception device according to embodiments may receive point cloud data according to the bitstream structure as shown in FIG. 28, and thus a different filtering method (decoding method) may be applied for each region (region divided into tiles or slices) instead of using a complicated decoding (filtering) method for the entire point cloud data according to the processing capacity of the reception device. Accordingly, a better image quality may be ensured in a region important to a user and appropriate latency may be ensured on a system.

When a geometry bitstream, an attribute bitstream, and/or a signaling bitstream (or signaling information) according to embodiments constitute one bitstream (or G-PCC bitstream) as shown in FIG. 28, the bitstream may include one or more sub-bitstreams. According to embodiments, a bitstream may contain a sequence parameter set (SPS) for signaling of a sequence level, a geometry parameter set (GPS) for signaling of geometry information coding, one or more attribute parameter sets (APSs) ($APS_0$ and $APS_1$) for signaling of attribute information coding, a tile inventory (also referred to as a TPS) for signaling at a tile level, and one or more slices (slice 0 to slice n). That is, a bitstream of point cloud data according to embodiments may include one or more tiles, wherein each tile may be a slice group including one or more slices (slice 0 to slice n). The tile inventory (i.e., TPS) may include information about each of the one or more tiles (e.g., coordinate value information and height/size information related to a tile bounding box). Each slice may include one geometry bitstream (Geom0) and/or one or more attribute bitstreams (Attr0 and Attr1). For example, slice 0 may include one geometry bitstream ($Geom0^0$) and one or more attribute bitstreams ($Attr0^0$ and $Attr1^0$).

The geometry bitstream in each slice may include a geometry slice header (geom_slice_header) and geometry slice data (geom_slice_data). According to embodiments, the geometry bitstream in each slice may be referred to as a geometry data unit, and the geometry slice header may be referred to as a geometry data unit header. Also, the geometry slice data may be referred to as geometry data unit data. According to embodiments, the geometry slice header (or geometry data unit header) may include identification information (geom_parameter_set_id) related to the parameter set included in the GPS, a tile identifier (geom_tile_id), a slice identifier (geom_slice_id), and information (geomBoxOrigin, geom _boxlog2_scale, geom_max_node_size_log2, geom_num_points) related to data included in the geometry slice data (geom_slice_data). geomBoxOrigin is geometry box origin information indicating the box origin of the geometry slice data, geom_box_log2_scale is information indicating a log scale of the geometry slice data, geom_max_node_size_log2 is information indicating the size of the root geometry octree node, and geom_num_points is information related to the number of points of the geometry slice data. The geometry slice data (or geometry data unit data) may include geometry information (or geometry data) related to the point cloud data in a corresponding slice.

Each attribute bitstream in each slice may include an attribute slice header (attr_slice_header) and attribute slice data (attr_slice_data). According to embodiments, the attribute bitstream in each slice may be referred to as an attribute data unit. Also, the attribute slice header may be referred to as an attribute data unit header, and the attribute slice data may be referred to as attribute data unit data. According to embodiments, the attribute slice header (or attribute data unit header) may include information about the corresponding attribute slice data (or corresponding attribute data unit), and the attribute slice data may include attribute information (also referred to as attribute data or attribute value) related to the point cloud data in the corresponding slice. When multiple attribute bitstreams are present in one slice, each attribute bitstream may include different attribute information. For example, one attribute bitstream may include attribute information corresponding to color, and another attribute stream may include attribute information corresponding to reflectance.

According to embodiments, parameters required for encoding and/or decoding of point cloud data may be defined in parameter sets of point cloud data (e.g., SPS, GPS, APS, and TPS (also referred to as a tile inventory)) and/or a header of the corresponding slice. For example, in encoding and/or decoding of geometry information, the parameters may be added to the GPS. In tile-based encoding and/or decoding, the parameters may be added to a tile and/or slice header.

According to embodiments, LoD generation-related information may be signaled in the sequence parameter set and/or the attribute parameter set.

According to embodiments, LoD generation-related information may be signaled in the tile parameter set and/or the attribute data unit header.

According to embodiments, LoD generation-related information may be signaled in the Supplemental Enhancement Information (SEI) message.

According to embodiments, when the syntax element defined below is applicable not only to the current point cloud data stream but also to multiple point cloud data streams, the LoD generation-related information may be delivered through higher-level parameter sets or the like.

According to embodiments, the LoD generation-related information may be defined in a corresponding position or a separate position depending on the application or the system, such a different application range, a different application method, and the like may be used. In the syntaxes of the present disclosure described below, the term "field" may have the same meaning as parameter or syntax element.

According to embodiments, parameters (which may be referred to metadata, signaling information, or the like) containing the LoD generation-related information may be generated by the metadata processor (or metadata generator) or signaling processor of the transmission device, and may be delivered to the reception device so as to be used in a decoding/reconstruction operation. For example, a parameter generated and transmitted by the transmission device may be acquired by a metadata parser of the reception device.

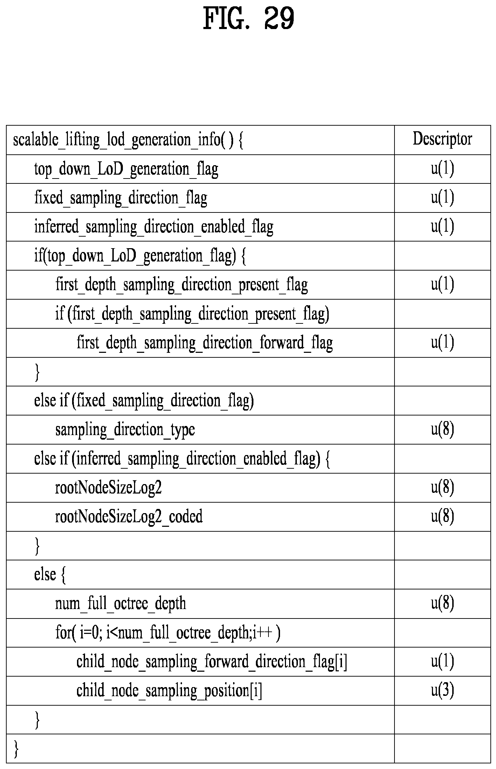

FIG. 29 shows an example syntax structure of LoD generation-related information (scalable_lifting_lod_generation_info( )) according to embodiments.

The LoD generation-related information (scalable_lifting_lod_generation_info( )) in FIG. 29 may include top_down_LoD_generation_flag, fixed_sampling_direction_flag, and inferred _sampling_direction_enabled_flag as fields.

The top_down_LoD_generation_flag field may indicate whether alternation of the sampling positions for scalable lifting LoD generation is performed in a top-down direction based on the initial sampling depth or in a bottom-up direction based on the leaf node level. For example, top_down_LoD_generation_flag set to 1 may indicate alternation of the sampling positions for attribute sampling from the child node performed for scalable lifting LoD generation is performed in a top-down direction based on the initial sampling depth (e.g., octree depth 1). Also, top_down_LoD_generation_flag field set to 0 may indicate that alternation of the sampling positions for attribute sampling from the child node performed for scalable lifting LoD generation is performed in a bottom-up manner based on the leaf node level. This means that the reference for determining the sampling positions changes from the bottom to the top, while the scalable lifting LoD generation is performed in a bottom-up manner.

The fixed_sampling_direction_flag field may indicate whether the sampling positions of attribute sampling from child nodes performed for scalable lifting LoD generation are fixed. fixed_sampling_direction_flag set to 1 may indicate that the sampling positions of attribute sampling from child nodes performed for scalable lifting LoD generation are fixed, while fixed_sampling_direction_flag set to 0 may indicate that the sampling positions are not fixed. In other words, fixed_sampling_direction_flag set to 1 may indicate that a sampling method of selecting points in a fixed order included in the sampling unit is used.

The inferred_sampling_direction_enabled_flag field may indicate whether a method of inferring the positions, i.e. sampling direction of sampling performed for scalable lifting LoD generation is used. inferred_sampling_direction_enabled_flag set to 1 may indicate that the method of inferring the sampling direction is used, while inferred_sampling_direction_enabled_flag set to 0 may indicate that the matter is that the method of inferring the sampling direction is not used.

According to embodiments, when the value of the top_down_LoD_generation_flag field is 1, the LoD generation-related information may further include the field first_depth _sampling_direction_present_flag. When the value of the first_depth_sampling_direction_present_flag field is 1, field has the value 1, the LoD generation-related information may further include the field first_depth_sampling_direction_forward_flag.

The first_depth _sampling_direction_present_flag field may indicate whether the sampling position is explicitly delivered for the reference octree depth. For example, first_depth _sampling_direction_present_flag set to 1 may indicate that the sampling position of attribute sampling from child nodes is explicitly delivered for the reference octree depth (e.g., octree depth 1). first_depth_sampling_direction_present_flag set to 0 may indicate that the sampling position of attribute sampling from child nodes is implicitly delivered (e.g., first child node / last child node).

The first_depth_sampling_direction_forward_flag field may indicate whether the attribute sampling from child nodes is performed in the forward direction or the reverse direction. first_depth_sampling_direction_forward_flag set to 1 may indicate that sampling is performed in the forward direction. In other words, it may indicate that the first node (or first child node) among the child nodes is sampled (or selected) for the initial sampling depth. first_depth_sampling_direction_forward_flag set to 0 may indicate that the sampling of the attribute sampling from child node is performed in the reverse direction. In other words, it may indicate that the last node (or the last child node) among the child nodes is sampled (or selected) for the initial sampling depth.

According to embodiments, when the value of the fixed_sampling_direction_flag field is 1, the LoD generation-related information may further include the field sampling_direction_type.

The sampling_direction_type field may indicate a method or sequence of points used for sampling. For example, sampling_direction_type set to 0 may indicate that the first point of the points sorted by Morton code is used. sampling_direction_type set to 1 may indicate that the last point of the points sorted by Morton code is used. sampling_direction_type set to 2 may indicate that the second point is used, and sampling_direction_type set to 3 may indicate that the third point is used.

According to embodiments, when the value of the fixed_sampling_direction_flag field is 1, the LoD generation-related information may further include the field sampling_direction_type.

According to embodiments, when the value of the inferred_sampling_direction_enabled_flag field is 1, the LoD generation-related information may further include the fields rootNodeSizeLog2 and rootNodeSizeLog2_coded.

The field rootNodeSizeLog2 may indicate the log2 scale value of the size of the node or bounding box that covers the entire point cloud data input to the encoder.

The field rootNodeSizeLog2_coded may indicate the log2 scale value of the size of the node or bounding box that covers the actually encoded point cloud data.

As exemplified in the present disclosure, the value of rootNodeSizeLog2 and/or the value of rootNodeSizeLog2_coded may be signaled directly as shown in FIG. 29, or may be inferred within the encoder/decoder based on the decoded geometry point cloud data.

According to embodiments, the encoder/decoder may infer the number of lost layers based on rootNodeSizeLog2 - rootNodeSizeLog2_coded, and may also infer the sampling positions used for this operation. It may signal the number of lost layers directly when necessary.

According to embodiments, when the value of the top_down_LoD_generation_flag field is 0, the LoD generation-related information may further include the field num_full_octree_depth.

num_full_octree_depth may indicate the octree depth considered in the encoding. In other words, when the value of the top_down_LoD_generation_flag field is 0, the sampling direction for scalable lifting LoD generation is determined in a bottom-up direction as in previous cases. Accordingly, rather than using the decoded geometry depth, the num_full_octree_depth field indicating the octree depth considered in the encoding may be used as a reference for determining the sampling direction at each octree depth.

According to embodiments, the LoD generation-related information may include a loop that iterates as many times as num_full_octree_depth. The loop may include the fields child _node_sampling_forward_direction_flag[i] and child _node_sampling_position[i].

child_node_sampling_forward_direction_flag[i] set to 1 may indicate that the sampling position of attribute sampling from child nodes is explicitly signaled for the i-th octree depth. child_node_sampling_forward_direction_flag[i] set to 0 may indicate that the sampling position of attribute sampling from child nodes is implicitly signaled (e.g., the first child node / last child node).

child_node_sampling_position[i] may indicate the sampling position at the i-th octree depth, i.e., the i-th octree level. That is, the sampling position at the i-th octree level (or octree depth) may be directly signaled. For example, child_node_sampling_position[i] set to 0 may indicate the first node; child_node_sampling_position[i] set to 1 may indicate the last node. Values from 2 to 7 may indicate that the first to sixth nodes (or the nearest nodes) are used (or sampled or selected).

According to embodiments, the LoD generation-related information (scalable _lifting_lod_generation_info( )) described in FIG. 29 may be included in the attribute parameter set.

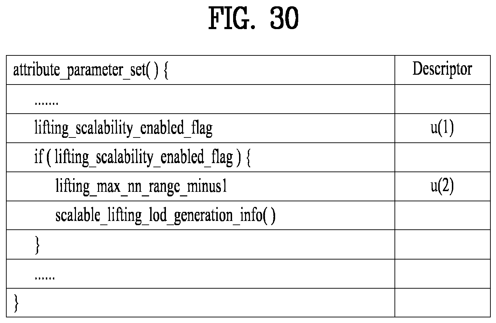

FIG. 30 shows an example of an attribute parameter set (attribute_parameter_set( )), specifically including LoD generation-related information (scalable _lifting_lod_generation _info( )) according to embodiments.

The attribute parameter set (attribute_parameter_set( )) of FIG. 30 may include the field lifting_scalability_enabled_flag.

lifting_scalability_enabled_flag may indicate whether the attribute decoding process allows pruned octree decoding result for the input geometry points. For example, lifting_scalability_enabled_flag equal to 1 specifies that the attribute decoding process allows the pruned octree decode result for the input geometry points. lifting_scalability_enabled_flag equal to 0 specifies that that the attribute decoding process requires the complete octree decode result for the input geometry points. When not present, the value of lifting_scalability_enabled_flag is inferred to be 0. When the value of trisoup_enabled_flag is 0, the value of lifting_scalability_enabled_flag shall be 0. Also, when geom_tree_coded_axis_list_present_flag is equal to 1, lifting_scalability_enabled_flag shall be equal to 0.

When the value of geom_scaling_enabled_flag is equal to 1, the value of lifting_scalability_enabled_flag should be 0 in order to guarantee partial decodability of the geometry point cloud.

According to embodiments, when the value of the lifting_scalability_enabled_flag field is equal to 1, the APS may include the fields lifting_max_nn_range_minus1 and scalable _lifting_lod_generation_info( ).

_liftingmax_nn_range_minus1 plus 1 specifies that maximum nearest neighbour range used to limit the distance of the point registered as neighbour. The value of lifting_max_nn_rangeis the number of octree nodes around the point.

scalable _lifting_lod_generation_info() is LoD generation-related information. It is described in detail in FIG. 29 and will not be described below to avoid redundancy.

According to embodiments, the LoD generation-related information (scalable _lifting_lod_generation _info()) described in FIG. 29 may be included in SEI. In the present disclosure, the SEI including the LoD generation-related information (scalable _lifting_lod_generation_info()) may be referred to as scalable _lifting_info_sei().

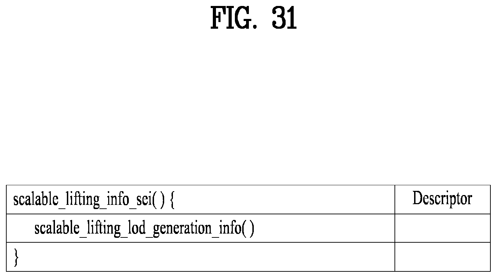

FIG. 31 shows an example syntax structure of scalable _lifting_info_sei() according to embodiments.

In FIG. 31, scalable_lifting_info_sei() may include scalable _lifting_lod_generation_info(). scalable _lifting_lod_generation_info() is LoD generation-related information. It is described in detail in FIG. 29 and will not be described below to avoid redundancy.

FIG. 32 is a diagram illustrating another example of a point cloud transmission device according to embodiments. The elements of the point cloud transmission device illustrated in FIG. 32 may be implemented by hardware, software, a processor, and/or a combination thereof.

According to embodiments, the point cloud transmission device may include a data input unit 53000, a geometry encoder 53001, an attribute encoder 53002, a metadata generator 53003, a sub-bitstream generator 53004, a multiplexer 53005, and a transmitter 53006.

The geometry encoder 53001 and the attribute encoder 53002 may perform part or all of the operations described in relation to the point cloud video encoder 10002 of FIG. 1, the encoding 20001 of FIG. 2, the point cloud video encoder of FIG. 3, and the point cloud video encoder of FIG. 8. Additionally, the geometry encoder 53001 and the attribute encoder 53002 may correspond to the previously described encoders or encoders of the transmission device.

According to embodiments, the data input unit 53000 receives or acquires point cloud data. The data input unit 53000 may perform part or all of the operations of the point cloud video acquisition unit 10001 of FIG. 1, or may perform part or all of the operations of the data input unit 8000 of FIG. 8.

The data input unit 53000 outputs the positions (geometry data, e.g., XYZ coordinates, phi-theta coordinates, etc.) of points in the point cloud data to the geometry encoder 53001, and the attributes (attribute data, e.g., color, reflectance, intensity, grayscale, opacity, medium, material, glossiness, etc.) of points in the point cloud data to the attribute encoder 53002. Also, it outputs parameters to the metadata generator 53003. According to embodiment, the parameters may also be provided to the geometry encoder 53001 and the attribute encoder 53002.

The geometry encoder 53001 constructs an octree based on the positions of the input points, and performs geometry compression based on the octree. The geometry encoder 53001 performs entropy encoding on the compressed geometry information and outputs the encoded information to the sub-bitstream generator 53004 in the form of a geometry bitstream.

The geometry encoder 53001 reconstructs the geometry information based on the positions changed by the compression, and outputs the reconstructed (or decoded) geometry information to the attribute encoder 53002.

According to embodiments, the geometry encoder 53001 constructs an octree based on the positions of the input points, performs layer-group-based slicing in the octree, selects one or more slices, and then compresses the geometry information about the one or more selected slices. The geometry encoder 53001 may also perform scalable transmission on the compressed geometry information. That is, it may transmit compressed geometry information up to a specific octree depth out of the full octree depth in the octree structure. The layer group-based slicing and the slice-by-slice geometry compression and scalable transmission according to the embodiments are described in detail above with reference to FIGS. 14 to 17 and therefore the description thereof is omitted below to avoid redundancy.

The attribute encoder 53002 compresses attribute information based on positions for which geometry encoding has not been performed and/or reconstructed geometry information. According to an embodiment, the attribute information may be coded using any one or a combination of one or more of RAHT coding, LOD-based predictive transform coding, and lifting transform coding. The attribute encoder 53002 performs entropy encoding on the compressed attribute information and outputs the information to the sub-bitstream generator 53004 in the form of an attribute bitstream.

According to embodiments, the attribute encoder 53002 may include an LoD generator. The LoD generator performs octree-based scalable lifting LoD generation described with reference to FIGS. 15 to 27, considering partial geometry (i.e., scalable transmission). The attribute encoder 53002 may find neighbor points nearest the point (or node) to be attribute-encoded based on the generated LoDs and perform predictive transform coding or lifting transform coding.

When scalable transmission is used, partial decoding may be performed on geometry and attributes, which may result in a difference between the encoding octree depth and the decoding octree depth. In this case, for scalable lifting, which performs LoD generation based on full octree depth, a mismatch may occur due to the difference between the encoding and decoding octree depths.

To address this mismatch, the attribute encoder 53002 may change the reference sampling position at one or more octree depths, and/or fix the sampling position at one or more octree depths, and/or explicitly signal the reference sampling position.

That is, the attribute encoder 53002 may perform sampling for each octree depth for scalable lifting LoD generation in the octree structure. In this case, the sampling positions may be determined by applying at least one of the first to fifth embodiments described above. For example, the first embodiment signals sampling positions for all octree depths except the leaf node level, while the second embodiment signals the sampling position for octree depth 1. In the first to fifth embodiments, information related to sampling positions may be included as LoD generation-related information in the attribute parameter set and/or SEI. In the first and second embodiments, the sampling position for the leaf node level may be fixed, as an example. The third embodiment fixes the sampling position for octree depth 1 and infers sampling positions for the other octree depths. The fourth embodiment fixes the sampling positions for all octree depths. The fifth embodiment infers the sampling positions (also referred to as sampling direction) used by the encoder. According to the fifth embodiment, lost layer information may be inferred based on the full layer information, bounding box information, or root node information related to the input point cloud data in the encoder along with the layer information, bounding box information, or root node information related to the actually decoded/encoded sub-data (i.e., point cloud data). The layer used by the encoder may be estimated (as octreeNodeSizeLog2 + rootNodeSizeLog2 - rootNodeSizeLog2_coded) based on the inference, and the sampling position (or sampling direction) used by the encoder may be inferred based on the estimated layer.

Further, the attribute encoder 53002 performs attribute prediction and compression or scalable lifting attribute compression based on the LoDs generated through sampling in the octree structure as described above.

The metadata generator 53003 may generate and/or process signaling information needed for encoding/decoding/rendering of the geometry information and attribute information, and provide the processed information to the geometry encoder 53001, the attribute encoder 53002, the sub-bitstream generator 53004, the multiplexer 53005, and/or the transmitter 53006. Alternatively, the metadata generator 53003 may be provided with signaling information generated by the geometry encoder 53001, the attribute encoder 53002, the sub-bitstream generator 53004, and/or the transmitter 53006. The metadata generator 53003 may provide information (e.g., head orientation information and/or viewport information) fed back from the reception device to the geometry encoder 53001, the attribute encoder 53002, the sub-bitstream generator 53004, the multiplexer 53005, and/or the transmitter 53006.

In the present disclosure, signaling information including LoD generation-related information may be signaled and transmitted at the level of a parameter set (sequence parameter set (SPS), geometry parameter set (GPS), attribute parameter set (APS), tile parameter set (TPS) (or tile inventory), etc.), and/or an attribute data unit (i.e., attribute slice). In other words, it may also be signaled and transmitted per coding unit (or compression unit or prediction unit) of each image, such as slice or tile. Also, in the present disclosure, the signaling information including the LoD generation-related information may be signaled in SEI.

According to the embodiments, the LoD generation-related information may include at least one of the following fields: top_down_LoD_generation_flag, fixed_sampling_direction_flag, inferred_sampling_direction_enabled_flag, first_depth_sampling_direction_present_flag, first_depth_sampling_direction_forward_flag, sampling_direction_type, rootNodeSizeLog2, rootNodeSizeLog2_coded, num_full_octree_depth, child_node_sampling_forward_direction_flag, and child_node_sampling_position. The definition of each field may be found in the descriptions of FIGS. 29 to 31.

According to embodiments, the sub-bitstream generator 53004 may output geometry and attribute bitstreams of a specific layer (or layer group or subgroup) to the multiplexer 53005, based on layering structure information provided by the metadata generator 53003. According to the present disclosure, point cloud data may be configured in an octree structure having layers according to the level of detail, which may enable scalable point cloud data coding and representation. The layer group structure may be referred to as a layer group slicing structure or a hierarchical slicing structure.

According to embodiments, the multiplexer 53005 multiplexes the geometry bitstream, attribute bitstream, and signaling bitstream (including, for example, parameters and/or LoD generation-related information) of a specific layer (or layer group or subgroup) into a single bitstream to be output to the transmitter 53006.

The transmitter 53006 may perform the same or similar operation and/or transmission method as the operation and/or transmission method of the transmission process 8012 of FIG. 8, and may perform the same or similar operation and/or transmission method as the operation and/or transmission method of the transmitter 10003 of FIG. 1. For details, which will not be described below, referred to the description of FIG. 1 or 8.

The transmitter 53006 may transmit the bitstream output from the multiplexer 53005, or may encapsulate the bitstream into a file, segment, or the like to be transmitted. In one embodiment, the file is in the ISOBMFF file format.

According to embodiments, the file or segment may be transmitted to the reception device, or may be stored in a digital storage medium (e.g., USB, SD, CD, DVD, Blu-ray, HDD, SSD, etc.). The transmitter 53006 according to the embodiments is capable of wired/wireless communication with the reception device over a network of 4G, 5G, 6G, etc. In addition, the transmitter 53006 may perform a necessary data processing operation according to the network system (e.g., a 4G, 5G or 6G communication network system). The transmitter 53006 may transmit the encapsulated data in an on-demand manner.

FIG. 33 is a diagram illustrating another example of a point cloud reception device according to embodiments. The elements of the point cloud reception device illustrated in FIG. 33 may be implemented by hardware, software, processors, and/or combinations thereof.

According to embodiments, the point cloud reception device may include a receiver 63001, a demultiplexer 63002, a sub-bitstream classifier 63003, a metadata parser 63004, a geometry decoder 63005, an attribute decoder 63006, and a renderer 63007.

According to embodiments, the receiver 63001 may receive a single bitstream, or may receive a geometry bitstream, an attribute bitstream, and a signaling bitstream. Upon receiving a file and/or a segment, the receiver 63001 according to the embodiments may decapsulate the received file and/or segment and output bitstreams.

When a bitstream is received (or decapsulated), the demultiplexer 63002 according to the embodiments may demultiplex a geometry bitstream, an attribute bitstream, and/or a signaling bitstream from the bitstream, and output the demultiplexed signaling bitstream to the metadata parser 63004, and the demultiplexed geometry bitstream and attribute bitstream of a specific layer (or layer group or subgroup) to the sub-bitstream classifier 63003.

The sub-bitstream classifier 63003 according to the embodiments may deliver the geometry bitstream and attribute bitstream to appropriate decoders based on information in the bitstream header. Alternatively, in the process, a layer (or layer group or layer information) required by the receiver may be selected based on the layering structure information included in the signaling information. Geometry data is reconstructed by the geometry decoder 63005 from the geometry bitstream classified by the sub-bitstream classifier 63003, and attribute data is reconstructed by the attribute decoder 63006 from the attribute bitstream.

The metadata parser 63004 may parse signaling information, for example, information contained in the SPS, GPS, APS, TPS, metadata, or the like from the input signaling bitstream, process the parsed information, and provide the processed information to the sub-bitstream classifier 63003, the geometry decoder 63005, the attribute decoder 63006, and/or the renderer 63007. In another embodiment, signaling information contained in the geometry data unit header and/or the attribute data unit header may also be parsed by the metadata parser 63004 prior to decoding the corresponding slice data.

According to embodiments, the metadata parser 63004 may also parse and process signaling information (e.g., LoD generation-related information) in the attribute parameter set, and/or the attribute data unit header, and/or the SEI, and provide the same to the attribute decoder 63006.

According to embodiments, the geometry decoder 63005 may perform a reverse process of the geometry encoder 53001 of FIG. 32 on the compressed geometry bitstream based on the signaling information to reconstruct the geometry. The restored (or reconstructed) geometry information from the geometry decoder 63005 is provided to the attribute decoder 63006. The attribute decoder 63006 may restore the attributes by performing a reverse process of the attribute encoder 53002 of FIG. 32 on the compressed attribute bitstream based on the signaling information and the reconstructed geometry information.

According to embodiments, the renderer 63007 may reconstruct and display/render the point cloud data by matching the geometry data (i.e., positions) reconstructed and output by the geometry decoder 63005 with the attribute data restored and output by the attribute decoder 63006.

According to embodiments, the attribute decoder 63006 may also include an LoD generator configured to perform LoD generation.

According to embodiments, the LoD generator 63006 may generate LoDs and perform partial decoding based on the octree structure generated based on the reconstructed geometry and the LoD generation-related information contained in the APS and/or SEI. In this case, the sampling positions for the octree depths required in performing sampling to perform LoD generation may be fixed positions as described in the first to fifth embodiments, or may be known from the LoD generation-related information, or may be inferred.

According to the embodiments, the LoD generation-related information may include at least one of the following fields: top_down_LoD_generation_flag, fixed_sampling_direction_flag, inferred_sampling_direction_enabled_flag, first_depth_sampling_direction_present_flag, first_depth_sampling_direction_forward_flag, sampling_direction_type, rootNodeSizeLog2, rootNodeSizeLog2_coded, num_full_octree _depth, child _node_sampling_forward_direction_flag, and child _node_sampling_position. The definition of each field may be found in the descriptions of FIGS. 29 to 31.

In other words, when scalable transmission is used, the geometry decoder 63005 and the attribute decoder 63006 may perform partial decoding on geometry and attributes, which may result in a difference between the encoding octree depth and the decoding octree depth. However, the geometry decoder 63005 and the attribute decoder 63006 are capable of identifying the sampling position of each octree depth used by the encoder, and therefore the same attributes as in the scalable lifting LoD generation performed during encoding may be sampled.

For example, the attribute decoder 63006 may estimate, based on the LoD generation-related information, the at least one octree depth (or level) skipped by the transmission device, estimate the sampling position based on at least one of the first to fifth embodiments, and perform partial decoding on the point cloud data based on the estimated sampling position. In other words, the decoder of the reception device may estimate the level (or layer) skipped by the encoder, and identify the sampling direction (or position) used by the encoder based on the result of the estimation, thereby addressing the mismatch in sampling position between the encoder and the decoder. Accordingly, partial decoding may be performed accurately.

As such, according to the present disclosure, the sampling positions for the scalable lifting LoD generation are consistent between the encoder and decoder, allowing the renderer 63007 to accurately represent the partial point cloud data.

For details of the LoD generation which will not be described below to avoid redundancy, refer to the description of FIGS. 11 to 32.

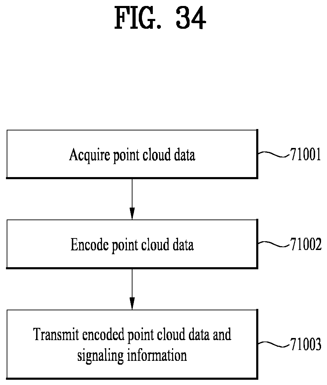

FIG. 34 is a flowchart illustrating a method of transmitting point cloud data according to embodiments.

A method of transmitting point cloud data according to embodiments may include acquiring point cloud data (operation 71001), encoding the point cloud data (operation 71002), and transmitting the encoded point cloud data and signaling information (operation 71003). In this case, a bitstream containing the encoded point cloud data and signaling information may be encapsulated in a file and transmitted.

Operation 71001 of acquiring the point cloud data may include part or all of the operations of the point cloud video acquisition unit 10001 of FIG. 1, or may include part or all of the operations of the data input unit 8000 of FIG. 8.

Operation 71002 of encoding the point cloud data may include part or all of the operations of the point cloud video encoder 10002 of FIG. 1, the encoder 20001 of FIG. 2, the point cloud video encoder of FIG. 3, the point cloud video encoder of FIG. 8, the attribute encoding of FIG. 25, the geometry encoder and attribute encoder of FIG. 30, and the attribute encoding of FIG. 31 for encoding of geometry information and attribute information.

According to embodiments, operation 71002 of encoding the point cloud data may include compressing geometry information related to the input point cloud data and compressing attribute information.

According to embodiments, the operation of compressing the geometry information may include constructing an octree using the positions of the input points, performing layer group-based slicing on the octree, selecting one or more slices, and compressing geometry information about the selected one or more slices. Further, the operation of compressing the geometry information may include performing scalable transmission on the compressed geometry information. In other words, the compressed geometry information up to a specific octree depth out of the full octree depth in the octree structure may be transmitted. The layer group-based slicing and slice-by-slice geometry compression and scalable transmission according to the embodiments have been described in detail with reference to FIGS. 14 to 17, and are therefore will not be described below to avoid redundancy.

The compressed geometry information is entropy-encoded and output in the form of a geometry bitstream.

According to embodiments, the operation of compressing the attribute information includes compressing the attribute information based on positions for which geometry encoding is not performed and/or reconstructed geometry information. In one embodiment, the attribute information may be coded using any one or a combination of one or more of RAHT coding, LOD-based predictive transform coding, and lifting transform coding.

According to embodiments, the operation of compressing the attribute information includes performing the octree-based scalable lifting LoD generation described with reference to FIGS. 15 to 27, taking into account the partial geometry (i.e., scalable transmission). Also, the operation of compressing the attribute information may include finding neighbor points nearest the point (or node) to be attribute-encoded based on the generated LoDs and performing predictive transform coding or lifting transform coding.

According to embodiments, to allow the attribute information to be accurately reconstructed by the receiver during partial decoding, the operation of compressing the attribute information may include changing the sampling reference position of the one or more octree depths, and/or fixing the sampling position of the one or more octree depths and/or clearly signaling the sampling reference position.

In other words, the operation of compressing the attribute information includes sampling each octree depth for scalable lifting LoD generation in the octree structure. The sampling position may be determined by applying at least one of the first to fifth embodiments described above. For example, the first embodiment signals sampling positions for all octree depths except the leaf node level, while the second embodiment signals the sampling position for octree depth 1. In the first to fifth embodiments, information related to sampling positions may be included as LoD generation-related information in the attribute parameter set and/or SEI. In the first and second embodiments, the sampling position for the leaf node level may be fixed, as an example. The third embodiment fixes the sampling position for octree depth 1 and infers sampling positions for the other octree depths. The fourth embodiment fixes the sampling positions for all octree depths. The fifth embodiment infers the sampling positions (also referred to as sampling direction) used by the encoder. According to the fifth embodiment, lost layer information may be inferred based on the full layer information, bounding box information, or root node information related to the input point cloud data in the encoder along with the layer information, bounding box information, or root node information related to the actually decoded/encoded sub-data (i.e., point cloud data). The layer used by the encoder may be estimated (as octreeNodeSizeLog2 + rootNodeSizeLog2 - rootNodeSizeLog2_coded) based on the inference, and the sampling position (or sampling direction) used by the encoder may be inferred based on the estimated layer.

The operation of compressing the attribute information includes performing attribute prediction and compression or scalable lifting attribute compression based on the LoDs generated through sampling in the octree structure as described above.

The compressed attribute information is entropy-encoded and output in the form of an attribute bitstream.

In the present disclosure, the signaling information including LoD generation-related information may be signaled and transmitted in a parameter set (SPS (sequence parameter set), GPS (geometry parameter set), APS (attribute parameter set), TPS (tile parameter set) (also referred to as tile inventory), etc.) and/or an attribute data unit (i.e., attribute slice). In other words, it may be signaled and transmitted per coding unit (or compression unit or prediction unit) of each image, such as a slice or tile. Further, in the present disclosure, the signaling information including the LoD generation-related information may be signaled and transmitted in SEI. For further details of the information included in the LoD generation-related information, which will not be described below, refer to FIGS. 29 to 31.

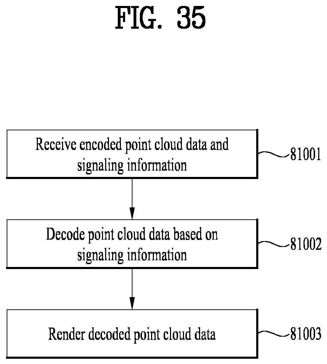

FIG. 35 is a flowchart illustrating a method of receiving point cloud data according to embodiments.

A method of receiving point cloud data according to embodiments may include receiving encoded point cloud data and signaling information (operation 81001), decoding the point cloud data based on the signaling information (operation 81002), and rendering the decoded point cloud data (operation 81003).

According to embodiments, operation 81001 of receiving the point cloud data and the signaling information may be performed by the receiver 10005 of FIG. 1, the transmission 20002 or decoding 20003 of FIG. 2, the receiver 9000 or reception processor 9001 of FIG. 9, or the receiver 63001 of FIG. 33.

According to embodiments, operation 81002 of decoding the point cloud data may include part or all of the operations of the point cloud video decoder 10006 of FIG. 1, the decoding 20003 of FIG. 2, the point cloud video decoder of FIG. 8, the point cloud video decoder of FIG. 9, and the geometry decoder and attribute decoder of FIG. 33 for decoding of geometry information and attribute information.

According to embodiments, operation 81002 of decoding the point cloud data includes decoding the geometry information and decoding attribute information.

The operation of decoding the geometry information may include partially decoding (i.e., reconstructing) the geometry information per layer group and/or subgroup based on the LoD generation-related information included in the signaling information.

The operation of decoding the attribute information may include partially decoding (i.e., decompressing) the attribute information per layer group and/or subgroup based on the reconstructed geometry information and the LoD generation-related information included in the signaling information. In one embodiment, the attribute information may be decoded using any one or a combination of one or more of RAHT coding, LOD-based predictive transform coding, and lifting transform coding.

According to embodiments, the operation of decoding the attribute information may include generating LoDs based on an octree structure generated based on the reconstructed geometry and LoD generation-related information contained in the APS and/or SEI, and performing partial decoding. In this case, the sampling positions for the octree depths required in performing sampling to perform LoD generation may be fixed positions as described in the first to fifth embodiments, or may be known from the LoD generation-related information, or may be inferred.

In other words, when scalable transmission is used, operation 81002 of decoding the point cloud data may include performing partial decoding on geometry and attributes, which may result in a difference between the encoding octree depth and the decoding octree depth. However, in operation 81002 of decoding the point cloud data, the sampling position of each octree depth used during the encoding process of the transmission device may be identified. Accordingly, the same attributes as in the scalable lifting LoD generation performed during the encoding may be sampled. For details of the LoD generation which will not be described below to avoid redundancy, refer to the description of FIGS. 11 to 32.

According to embodiments, the rendering 81003 may include reconstructing the point cloud data based on the restored (or reconstructed) geometry information and attribute information and performing rendering according to various rendering schemes. For example, the points in the point cloud content may be rendered as a vertex having a certain thickness, a cube having a certain minimum size centered at the corresponding vertex position, or a circle centered at the vertex position. All or a portion of the rendered point cloud content may be presented to a user through a display (e.g., VR/AR display, conventional display, etc.). According to embodiments, operation 81003 of rendering the point cloud data may be performed by the renderer 10007 of FIG. 1, the rendering 20004 of FIG. 2, or the renderer 9011 of FIG. 9.

As such, according to the present disclosure, the sampling positions for the scalable lifting LoD generation are consistent between encoding/decoding, and therefore the rendering operation 81003 may accurately represent the partial point cloud data.

According to embodiments, the LoD generation used in scalable lifting may alternately applying sampling positions according to the octree depths on the assumption of full octree depth geometry to use attributes of a position closer to the node center, thereby improving compression efficiency. Further, supporting scalable transmission may support partial geometry. In this case, the sampling positions for scalable lifting LoD generation may be inconsistent between the encoder and the decoder, which may result in an inaccurate representation of the partial point cloud.

The present disclosure may resolve mismatches in geometry/attribute that may occur during partial decoding by changing the sampling positions for one or more octree depths required for LoD generation in the octree structure, or by fixing the sampling positions in a specific order, or by explicitly signaling the sampling positions.

Accordingly, the point cloud data transmission/reception method and device may encode and/or decode point cloud data in a scalable manner, taking partial geometry into account, and may effectively compress and reconstruct point cloud data based on the operations and/or related signaling information according to the embodiments.

Each part, module, or unit described above may be a software, processor, or hardware part that executes successive procedures stored in a memory (or storage unit). Each of the steps described in the above embodiments may be performed by a processor, software, or hardware parts. Each module/block/unit described in the above embodiments may operate as a processor, software, or hardware. In addition, the methods presented by the embodiments may be executed as code. This code may be written on a processor readable storage medium and thus read by a processor provided by an apparatus.

In the specification, when a part "comprises" or "includes" an element, it means that the part further comprises or includes another element unless otherwise mentioned. Also, the term "...module(or unit)" disclosed in the specification means a unit for processing at least one function or operation, and may be implemented by hardware, software or combination of hardware and software.

Although embodiments have been explained with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may fall within the scope of the appended claims and their equivalents.

The apparatuses and methods may not be limited by the configurations and methods of the embodiments described above. The embodiments described above may be configured by being selectively combined with one another entirely or in part to enable various modifications.

Although preferred embodiments of the embodiments have been shown and described, the embodiments are not limited to the specific embodiments described above, and various modifications may be made by one of ordinary skill in the art without departing from the spirit of the embodiments claimed in the claims, and such modifications should not be understood in isolation from the technical ideas or views of the embodiments.

Various elements of the apparatuses of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the apparatus according to the embodiments may include one or more processors capable of executing one or more programs. The one or more programs may perform any one or more of the operations/methods according to the embodiments or include instructions for performing the same. Executable instructions for performing the method/operations of the apparatus according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted to indicate "and/or." For instance, the expression "A/B" may mean "A and/or B." Further, "A, B" may mean "A and/or B." Further, "A/B/C" may mean "at least one of A, B, and/or C." Also, "A/B/C" may mean "at least one of A, B, and/or C." Further, in the document, the term "or" should be interpreted to indicate "and/or." For instance, the expression "A or B" may comprise 1) only A, 2) only B, and/or 3) both A and B. In other words, the term "or" in this document should be interpreted to indicate "additionally or alternatively."

Various elements of the embodiments may be implemented by hardware, software, firmware, or a combination thereof. Various elements in the embodiments may be executed by a single chip such as a single hardware circuit. According to embodiments, the element may be selectively executed by separate chips, respectively. According to embodiments, at least one of the elements of the embodiments may be executed in one or more processors including instructions for performing operations according to the embodiments.

Operations according to the embodiments described in this specification may be performed by a transmission/-reception device including one or more memories and/or one or more processors according to embodiments. The one or more memories may store programs for processing/controlling the operations according to the embodiments, and the one or more processors may control various operations described in this specification. The one or more processors may be referred to as a controller or the like. In embodiments, operations may be performed by firmware, software, and/or combinations thereof. The firmware, software, and/or combinations thereof may be stored in the processor or the memory.

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise. The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components.

As used herein, conditional expressions such as "if" and "when" are not limited to an optional case and are intended to be interpreted, when a specific condition is satisfied, to perform the related operation or interpret the related definition according to the specific condition. Embodiments may include variations/modifications within the scope of the claims and their equivalents. It will be apparent to those skilled in the art that various modifications and variations can be made in the present disclosure without departing from the spirit and scope of the disclosure. Thus, it is intended that the present disclosure cover the modifications and variations of this disclosure provided they come within the scope of the appended claims and their equivalents.

[Mode for Disclosure]

As described above, related contents have been described in the best mode for carrying out the embodiments.

[Industrial Applicability]

As described above, the embodiments may be fully or partially applied to the point cloud data transmission/reception device and system. It will be apparent to those skilled in the art that various changes or modifications may be made to the embodiments within the scope of the embodiments. Thus, it is intended that the embodiments cover modifications and variations provided they come within the scope of the appended claims and their equivalents.

**Claims**

1.   A method of transmitting point cloud data, the method comprising:

  encoding geometry data of point cloud data;
  encoding attribute data of the point cloud data based on the geometry data; and
  transmitting the encoded geometry data, the encoded attribute data, and signaling information.

2.   The method of claim 1, wherein the encoding of the geometry data comprises:

  recursively partitioning a bounding box of the point cloud data and generating an octree structure; and
  compressing geometry data based on the octree structure,
  wherein the octree structure comprises a plurality of octree depths,
  wherein:

    a first octree depth among the octree depths corresponds to a root node; and
    a last octree depth among the octree depths corresponds to a leaf node,
    wherein the encoded geometry data transmitted in the transmission comprises information about octree depths ranging from the octree depth corresponding to the root node to a specific octree depth among the octree depths.

3.   The method of claim 2, wherein the encoding of the attribute data comprises:

  generating one or more levels of detail (LoDs) based on the octree structure; and
  compressing the attribute data based on at least one of the one or more LoDs,
  wherein the generating of the one or more LoDs comprises mapping sampled nodes of one or more octree depths of the octree structure to a single LoD,
  wherein an attribute of a specific node at an upper octree depth is determined as an attribute of a sampled child node among child nodes at a lower octree depth.

4.   The method of claim 3, wherein a sampling position for sampling one of the child nodes is fixed or signaled in the signaling information depending on the octree depths.

5.   The method of claim 4, wherein the signaling information comprises at least one of information indicating a sampling position for at least one of the octree depths or information for inferring the sampling position for the at least one of the octree depths.

6.   A device for transmitting point cloud data, comprising:

  a geometry encoder configured to encode geometry data of point cloud data;
  an attribute encoder configured to encode attribute data of the point cloud data based on the geometry data; and
  a transmitter configured to transmit the encoded geometry data, the encoded attribute data, and signaling information.

7.   The device of claim 6, wherein the geometry encoder comprises:
  a geometry compressor configured to:

recursively partition a bounding box of the point cloud data and generate an octree structure; and
compress the geometry data based on the octree structure,
wherein the octree structure comprises a plurality of octree depths,
wherein:

a first octree depth among the octree depths corresponds to a root node; and
a last octree depth among the octree depths corresponds to a leaf node,
wherein the encoded geometry data transmitted by the transmitter comprises information about octree depths ranging from the octree depth corresponding to the root node to a specific octree depth among the octree depths.

8. The device of claim 7, wherein the attribute encoder comprises:

a level of detail (LoD) generator configured to generate one or more LoDs based on the octree structure; and
an attribute compressor configured to compress the attribute data based on at least one of the one or more LoDs,
wherein the LoD generator maps sampled nodes of one or more octree depths of the octree structure to a single LoD,
wherein an attribute of a specific node at an upper octree depth is determined as an attribute of a sampled child node among child nodes at a lower octree depth.

9. The device of claim 8, wherein a sampling position for sampling one of the child nodes is fixed or signaled in the signaling information depending on the octree depths.

10. The device of claim 9, wherein the signaling information comprises at least one of information indicating a sampling position for at least one of the octree depths or information for inferring the sampling position for the at least one of the octree depths.

11. A method of receiving point cloud data, the method comprising:

receiving encoded geometry data, encoded attribute data, and signaling information;
decoding the encoded geometry data based on the signaling information; and
decoding the encoded attribute data based on the geometry data and the signaling information.

12. The method of claim 11, wherein the decoding of the geometry data comprises:

generating an octree structure based on the signaling information; and
reconstructing the geometry data based on the octree structure,
wherein the octree structure comprises a plurality of octree depths,
wherein the reconstructed geometry data comprises information about octree depths ranging from an octree depth corresponding to a root node to a specific octree depth among the octree depths.

13. The method of claim 12, wherein the decoding of the attribute data comprises:

generating one or more levels of detail (LoDs) based on the signaling information and the octree structure; and
reconstructing the attribute data based on at least one of the one or more LoDs,
wherein the generating of the one or more LoDs comprises mapping sampled nodes of one or more octree depths of the octree structure to a single LoD,
wherein an attribute of a specific node at an upper octree depth is determined as an attribute of a sampled child node among child nodes at a lower octree depth.

14. The method of claim 13, wherein a sampling position for sampling one of the child nodes is fixed or signaled in the signaling information depending on the octree depths.

15. The method of claim 14, wherein the signaling information comprises at least one of information indicating a sampling position for at least one of the octree depths or information for inferring the sampling position for the at least one of the octree depths.

# FIG. 1

FIG. 2

# FIG. 3

positions                                    attributes

| 30000 | Transform coordinates | | Transform colors | 30006 |

| 30001 | Quantize and remove points (voxelize) | | Transfer attributes | 30007 |

30008

| 30002 | Analyze octree | | RAHT | Generate LOD | 30009 |

| 30003 | Analyze surface approximation | | | Lifting | 30010 |

30005 | Reconstruct geometry | Quantize coefficients | 30011 |

| 30004 | Arithmetic encode | | Arithmetic encode | 30012 |

geometry bitstream                           attribute bitstream

# FIG. 4

## FIG. 5

Level of details

# FIG. 6

Original order

P0, P1, P2, P3, P4, P5, P6, P7, P8, P9

LOD-based order

P0, P5, P4, P2 | P1, P6, P3 | P9, P8, P7

LOD0

LOD1

LOD2

# FIG. 7

# FIG. 8

# FIG. 9

Reception

↓

9000 — Receiver

↓

9001 — Reception processor

9006

Geometry bitstream | Set value, etc. | Attribute bitstream

9002 — Arithmetic decoder ← Metadata parser → Arithmetic decoder — 9007

↓

9003 — Occupancy code-based octree reconstruction processor ← Inverse quantization processor — 9008

↓

9004 — Surface model processor (triangle reconstruction, up-sampling, voxelization) ← Prediction /lifting/RAHT inverse transform processor — 9009

↓

9005 — Inverse quantization processor ← Color inverse transform processor — 9010

Sharing reconstructed position values

Renderer — 9011

↓

# FIG. 10

FIG. 11

# FIG. 12

# FIG. 13

# FIG. 14

# FIG. 15

# FIG. 16

Full geometry / full attribute case

root

41050

41040

41041 — Sample the LAST child node
41042

41031 — Sample the FIRST child node
41030

41021 — Sample the LAST child node
41020

leaf — Sample the FIRST child node
41011  41012  41013
41010
41022

EP 4 607 924 A1

# FIG. 17

Geometry tree structure

attribute layer structure (aligned with geometry tree structure)

(a)

(b)

# FIG. 18

| octree depth | encoder<br>(full octree depth 4) | decoder<br>(partial octree depth 3) |
|---|---|---|
| 1 | Last | First |
| 2 | First | Last |
| 3 | Last | First (wrong assumption) |
| 4 | First (fixed) | — |

# FIG. 19

partial geometry (octree depth 3 out of 4) / partial attribute case

root

leaf

Sample the FIRST child node

Sample the LAST child node

Sample the FIRST child node

# FIG. 20

| octree depth | encoder (full octree depth 4) | decoder (partial octree depth 3) |
|---|---|---|
| 1 | Last | Last (signaled) |
| 2 | First | First (signaled) |
| 3 | Last | Last (signaled) |
| 4 | First (fixed) | — |

# FIG. 21

partial geometry (octree depth 3 out of 4) / partial attribute case

root

leaf

Sample the LAST child node

Sample the FIRST child node

Sample the LAST child node

Sample the FIRST child node

# FIG. 22

| octree depth | encoder<br>(full octree depth 4) | decoder<br>(partial octree depth 3) |
|:---:|:---:|:---:|
| 1 | Last | Last (signaled) |
| 2 | First | First (inferred) |
| 3 | Last | Last (inferred) |
| 4 | First (fixed) | — |

# FIG. 23

partial geometry (octree depth 3 out of 4) / partial attribute case

root

Signal the sampling position of octree depth 1

Sample the LAST child node

Sample the FIRST child node

leaf

Sample the LAST child node

# FIG. 24

| octree depth | encoder (full octree depth 4) | decoder (partial octree depth 3) |
|---|---|---|
| 1 | First (fixed) | First (fixed position) |
| 2 | Last | Last (inferred) |
| 3 | First | First (inferred) |
| 4 | Last | — |

# FIG. 25

partial geometry (octree depth 3 out of 4) / partial attribute case

root

Fix the sampling position of octree depth 1

Sample the FIRST child node

Sample the LAST child node

leaf

Sample the FIRST child node

# FIG. 26

| octree depth | encoder (full octree depth 4) | decoder (partial octree depth 3) |
|---|---|---|
| 1 | First (fixed) | First (fixed) |
| 2 | First (fixed) | First (fixed) |
| 3 | First (fixed) | First (fixed) |
| 4 | First (fixed) | — |

# FIG. 27

| octree depth | encoder (full octree depth 4) | decoder (partial octree depth 3) |
|---|---|---|
| 1 | Last (fixed) | Last (fixed) |
| 2 | Last (fixed) | Last (fixed) |
| 3 | Last (fixed) | Last (fixed) |
| 4 | Last (fixed) | — |

# FIG. 28

# FIG. 29

| scalable_lifting_lod_generation_info( ) { | Descriptor |
|---|---|
|    top_down_LoD_generation_flag | u(1) |
|    fixed_sampling_direction_flag | u(1) |
|    inferred_sampling_direction_enabled_flag | u(1) |
|    if(top_down_LoD_generation_flag) { | |
|       first_depth_sampling_direction_present_flag | u(1) |
|       if (first_depth_sampling_direction_present_flag) | |
|          first_depth_sampling_direction_forward_flag | u(1) |
|    } | |
|    else if (fixed_sampling_direction_flag) | |
|       sampling_direction_type | u(8) |
|    else if (inferred_sampling_direction_enabled_flag) { | |
|       rootNodeSizeLog2 | u(8) |
|       rootNodeSizeLog2_coded | u(8) |
|    } | |
|    else { | |
|       num_full_octree_depth | u(8) |
|       for( i=0; i<num_full_octree_depth;i++ ) | |
|          child_node_sampling_forward_direction_flag[i] | u(1) |
|          child_node_sampling_position[i] | u(3) |
|    } | |
| } | |

# FIG. 30

| attribute_parameter_set( ) { | Descriptor |
|---|---|
| ....... | |
| lifting_scalability_enabled_flag | u(1) |
| if ( lifting_scalability_enabled_flag ) { | |
| lifting_max_nn_range_minus1 | u(2) |
| scalable_lifting_lod_generation_info( ) | |
| } | |
| ...... | |
| } | |

# FIG. 31

| scalable_lifting_info_sei( ) { | Descriptor |
|---|---|
|    scalable_lifting_lod_generation_info( ) | |
| } | |

# FIG. 32

point cloud data → Data Input Unit (53000)

Data Input Unit → Positions → Geometry Encoder (53001)

Geometry Encoder → Geometry bitstream → Sub-bitstream generator (53004)

Data Input Unit → Attributes → Attribute Encoder (53002)

Attribute Encoder → Attribute bitstream → Metadata generator (53003)

Sub-bitstream generator → Sub-bitstream (per layer) → Mux (53005)

Metadata generator → Parameters → Mux

Mux → Transmitter (53006)

Layering structure info.

metadata

EP 4 607 924 A1

FIG. 33

EP 4 607 924 A1

# FIG. 34

| Acquire point cloud data | ~71001 |
| Encode point cloud data | ~71002 |
| Transmit encoded point cloud data and signaling information | ~71003 |

# FIG. 35

| Receive encoded point cloud data and signaling information | ~81001 |

↓

| Decode point cloud data based on signaling information | ~81002 |

↓

| Render decoded point cloud data | ~81003 |

## INTERNATIONAL SEARCH REPORT

| International application No. |
| --- |
| **PCT/KR2023/016243** |

### A. CLASSIFICATION OF SUBJECT MATTER

**H04N 19/30**(2014.01)i; **H04N 19/597**(2014.01)i; **H04N 19/132**(2014.01)i; **H04N 19/96**(2014.01)i; **H04N 19/70**(2014.01)i

According to International Patent Classification (IPC) or to both national classification and IPC

### B. FIELDS SEARCHED

Minimum documentation searched (classification system followed by classification symbols)

H04N 19/30(2014.01); G06T 5/00(2006.01); G06T 9/00(2006.01); G06T 9/40(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 기하(geometry), 속성(attribute), 비트스트림(bitstream), 시그널링 (signaling), 옥트리(octree), 바운딩박스(bounding box), 깊이(depth), 포인트 클라우드(point cloud)

### C. DOCUMENTS CONSIDERED TO BE RELEVANT

| Category* | Citation of document, with indication, where appropriate, of the relevant passages | Relevant to claim No. |
| --- | --- | --- |
| X | WO 2022-092852 A1 (LG ELECTRONICS INC.) 05 May 2022 (2022-05-05) See paragraphs [0066], [0088], [0098], [0108], [0262], [0277]-[0278], [0281], [0300], [0331] and [0422]; claims 1-3; and figure 6. | 1-15 |
| X | KR 10-2022-0124164 A (QUALCOMM INCORPORATED) 13 September 2022 (2022-09-13) See paragraphs [0024]-[0025] and [0041]-[0045]; and figures 1-3. | 1,6,11 |
| X | KR 10-2022-0124151 A (SAMSUNG ELECTRONICS CO., LTD.) 13 September 2022 (2022-09-13) See paragraphs [0019], [0029], [0096] and [0107]-[0116]; and figure 5b. | 1,6,11 |
| X | KR 10-2022-0077097 A (HYUNDAI MOTOR COMPANY et al.) 08 June 2022 (2022-06-08) See paragraphs [0024]-[0028] and [0111]; and figure 3. | 1,6,11 |
| X | KR 10-2022-0029595 A (GUANGDONG OPPO MOBILE TELECOMMUNICATIONS CORP., LTD.) 08 March 2022 (2022-03-08) See paragraphs [0036]-[0037], [0132]-[0133], [0139] and [0144]; and figures 1 and 11. | 1,6,11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **30 January 2024** | **30 January 2024** |

| Name and mailing address of the ISA/KR | Authorized officer |
| --- | --- |
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| WO | 2022-092852 | A1 | 05 May 2022 | CN | 116438799 | A | 14 July 2023 |
| | | | | EP | 4240016 | A1 | 06 September 2023 |
| | | | | US | 2023-0377203 | A1 | 23 November 2023 |
| KR | 10-2022-0124164 | A | 13 September 2022 | CN | 114930858 | A | 19 August 2022 |
| | | | | EP | 4088472 | A1 | 16 November 2022 |
| | | | | US | 11350132 | B2 | 31 May 2022 |
| | | | | US | 2021-0211734 | A1 | 08 July 2021 |
| | | | | WO | 2021-142239 | A1 | 15 July 2021 |
| KR | 10-2022-0124151 | A | 13 September 2022 | CN | 114982238 | A | 30 August 2022 |
| | | | | EP | 4059222 | A1 | 21 September 2022 |
| | | | | US | 11803987 | B2 | 31 October 2023 |
| | | | | US | 2023-0169693 | A1 | 01 June 2023 |
| | | | | WO | 2021-141400 | A1 | 15 July 2021 |
| KR | 10-2022-0077097 | A | 08 June 2022 | CN | 116530085 | A | 01 August 2023 |
| | | | | EP | 4254957 | A1 | 04 October 2023 |
| KR | 10-2022-0029595 | A | 08 March 2022 | CN | 114339215 | A | 12 April 2022 |
| | | | | EP | 3979638 | A1 | 06 April 2022 |
| | | | | JP | 2022-539411 | A | 08 September 2022 |
| | | | | US | 11509939 | B2 | 22 November 2022 |
| | | | | US | 2023-0058703 | A1 | 23 February 2023 |
| | | | | WO | 2021-000658 | A1 | 07 January 2021 |

Form PCT/ISA/210 (patent family annex) (July 2022)